Europäisches Patentamt

(19) European Patent Office

Office européen des brevets

(11) Numéro de publication: **0 092 521**
**B1**

(12) **FASCICULE DE BREVET EUROPEEN**

(45) Date de publication du fascicule du brevet:
**28.10.87**

(51) Int. Cl.⁴: **G 04 C 3/14, H 02 K 16/02**

(21) Numéro de dépôt: **83810153.3**

(22) Date de dépôt: **14.04.83**

(54) **Organe moteur et son procédé de commande.**

(30) Priorité: **21.04.82 CH 2411/82**

(43) Date de publication de la demande:
**26.10.83 Bulletin 83/43**

(45) Mention de la délivrance du brevet:
**28.10.87 Bulletin 87/44**

(84) Etats contractants désignés:
**DE FR GB**

(56) Documents cités:
**EP - A - 0 026 002**
**CH - A - 613 837**
**CH - A - 616 302**
**DE - A - 2 427 742**
**FR - A - 2 433 849**
**GB - A - 2 054 978**
**US - A - 4 112 671**
**US - A - 4 144 467**

(73) Titulaire: **ETA S.A., Fabriques d'Ebauches,
Schild-Rust-Strasse 17, CH-2540 Granges (CH)**

(72) Inventeur: **Guerin, Yves, Däderizstrasse 108,
CH-2540 Granges (CH)**
Inventeur: **Meister, Pierre-André, Haldenstrasse 76,
CH-2502 Bienne (CH)**

(74) Mandataire: **de Montmollin, Henri et al, ICB Ingénieurs
Conseils en Brevets SA Passage Max. Meuron 6,
CH-2001 Neuchâtel (CH)**

## Description

La présente invention a pour objet un organe moteur destiné à entraîner deux éléments mobiles indépendamment l'un de l'autre, et notamment, mais pas exclusivement, deux éléments d'affichage des informations horaires dans une pièce d'horlogerie électronique. La présente invention a également pour objet un procédé de commande de cet organe moteur.

Les pièces d'horlogerie électronique à affichage des informations horaires par des éléments mécaniques tels que des aiguilles ou des disques indicateurs comportent en général un moteur couplé à des éléments d'affichage par un train d'engrenages.

Ce moteur est généralement un moteur pas-à-pas dont le rotor comporte un aimant permanent couplé magnétique à une bobine par l'intermédiaire d'un stator. Un circuit électronique de commande envoie des impulsions périodiques à la bobine et le rotor avance d'un pas, c'est-à-dire en général d'un demi-tour, à chacune de ces impulsions.

La plupart de ces moteurs sont destinés à ne tourner que dans un seul sens. Il est cependant parfois souhaité de pouvoir faire tourner le moteur dans les deux sens, notamment pour faciliter les opérations de mise à l'heure de la montre. Une disposition particulière du circuit de commande, décrite par exemple dans le brevet américain no 4 112 671, permet de faire tourner dans les deux sens un moteur prévu pour ne tourner normalement que dans un sens.

Il existe également des moteurs bi-directionnels, ou réversibles, tels que celui qui est décrit dans le brevet suisse no 616 302, qui sont prévus pour tourner dans les deux sens.

Certaines pièces d'horlogerie, notamment celle qui est décrite dans le brevet suisse no 613 837, sont munies de deux moteurs réversibles. L'un de ces moteurs entraîne, par exemple, les organes d'affichage de la seconde et de la minute, l'autre les organes d'affichage de l'heure et de la date. Cette disposition facilite grandement la mise à l'heure de la pièce d'horlogerie, et notamment le changement de fuseau horaire qui peut s'effectuer sans que l'affichage des secondes et des minutes ne soit perturbé.

La place disponible dans une pièce d'horlogerie, et notamment dans une montre-bracelet, étant très limitée, il est difficile de loger dans celle-ci deux moteurs. En outre, les moteurs étant des éléments relativements chers, le prix de revient de la montre est augmenté dans de notables proportions par la présence de ces deux moteurs.

La demande de brevet français no 2 433 849 décrit un ensemble de plusieurs moteurs dont les rotors sont montés sur une plaque de base commune dont certaines parties servent de stator. Chacun de ces moteurs est muni de ses propres bobines, de sorte que l'encombrement et le prix de revient d'un tel ensemble ne sont guère réduits par rapport à ceux de moteurs séparés, ce qui le rend inapte à être utilisé dans une pièce d'horlogerie.

Un but de la présente invention est de proposer un organe moteur permettant de réaliser les mêmes fonctions que deux moteurs séparés pouvant tourner chacun dans les deux sens, tout en occupant un volume nettement plus limité et en coûtant nettement moins cher que ces deux moteurs. Un autre but de la présente invention est de proposer un procédé de commande de cet organe moteur.

Ces buts sont atteints par l'organe moteur et par le procédé revendiqués.

L'invention va maintenant être décrite en détail à l'aide du dessin dans lequel:

— la fig. 1 est une vue en plan d'une première forme d'exécution de l'organe moteur selon l'invention;

— la fig. 1a est une vue en coupe d'une variante de l'organe moteur de la fig. 1;

— la fig. 2 est un tableau résumant les diverses étapes de la commande de l'organe moteur de la fig. 1;

— la fig. 3 est une vue en plan d'une deuxième forme d'exécution de l'organe moteur selon l'invention;

— la fig. 3a est une vue en plan partielle d'une variante de l'organe moteur de la fig. 3;

— les fig. 3b et 3c sont de vues en coupe de variantes de l'organe moteur de la fig. 3;

— la fig. 4 est un tableau résumant les diverses étapes de la commande de l'organe moteur de la fig. 3;

— la fig. 5 est le schéma d'un exemple de circuit de commande de l'organe moteur selon l'invention; et

— les fig. 6a, 6b, 7a et 7b sont des diagrammes représentant des signaux mesurés en divers points du circuit de la fig. 5 pendant les diverses étapes de la commande de l'organe moteur selon l'invention.

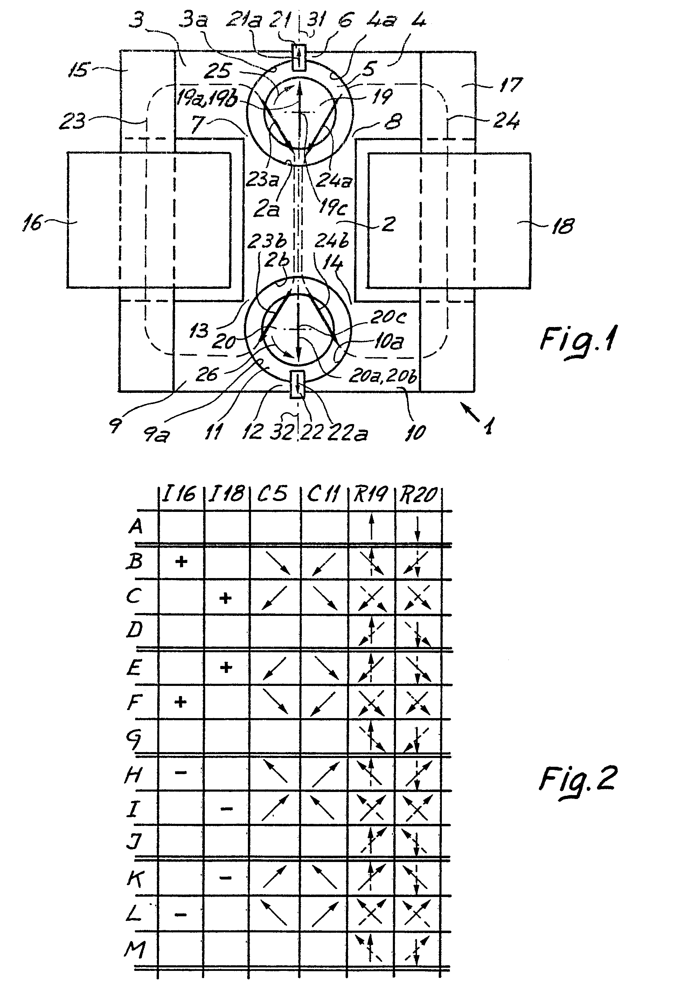

Dans la forme d'exécution représentée à la fig. 1, l'organe moteur selon l'invention, qui sera par la suite appelé simplement le moteur, comporte un stator 1, constitué d'une plaque en matériau magnétique doux.

Ce stator 1 comprend une première pièce polaire 2 dont les extrémités sont découpées en arcs de cercle concaves et forment deux épanouissements polaires 2a et 2b. Le stator 1 comprend en outre deux autres pièces polaires 3 et 4 ayant chacune une extrémité découpée en arc de cercle concave et formant ainsi deux autres épanouissements polaires 3a, respectivement 4a.

Les pièces polaires 2, 3 et 4 sont disposées de manière que les épanouissements polaires 2a, 3a et 4a délimitent entre eux un espace sensiblement cylindrique 5. Les extrémités des épanouissements polaires 2a, 3a et 4a se rejoignent par des zones 6, 7 et 8 en forme d'isthmes de section suffisamment faible pour que leur réluctance soit nettement plus grande que celle des pièces polaires 2, 3 et 4 et du reste du circuit magnétique qui va être décrit.

Le stator 1 comporte encore deux autres pièces polaires 9 et 10 comparables aux pièces polaires 3 et 4 et dont les extrémités découpées en arc de cercle concave forment des épanouissement polaires 9a et 10a. Les pièces polaires 2, 9 et 10 sont disposées de manière que les épanouissements polaires 2b, 9a et 10a délimitent entre eux un deuxième espace sensiblement cylindrique 11. Les épanouissements polaires 2b, 9a et 10a sont réunis par des isthmes 12, 13 et 14 dont la réluctance est également plus élevée que celle du reste du circuit magnétique.

Dans l'exemple décrit, ces isthmes 6, 7, 8, 12, 13 et 14 forment une seule pièce avec les pièces polaires 2, 3, 4, 9 et 10. Dans d'autres formes d'exécution, qui ne seront pas décrites, ils pourraient être remplacés par des pièces en matériau non magnétique, ou même être supprimés. Dans ce dernier cas, les pièces polaires 2, 3, 4, 9 et 10 seraient par exemple fixées individuellement sur un support commun.

Les extrémités des pièces polaires 3 et 9 opposées aux épanouissements polaires 3a et 9a sont reliées par une armature 15 qui forme le noyau d'une bobine 16. De même, les extrémités des pièces polaires 4 et 10 opposées aux épanouissements polaires 4a et 10a sont reliées par une armature 17 qui forme le noyau d'une deuxième bobine 18.

Les armatures 15 et 17 sont fixées aux pièces polaires 3, 4, 9 et 10, par exemple, par des vis non représentées qui peuvent servir également à fixer le stator 1 à l'emplacement qui lui est destiné. Il est évident que la liaison entre les armatures et les pièces polaires est réalisée de manière que la réluctance de cette liaison soit aussi faible que possible.

Le moteur comprend en outre deux rotors qui comportent chacun, de manière classique, un aimant permanent cylindrique aimanté diamétralement et fixé à un arbre qui pivote entre deux paliers autour d'un axe perpendiculaire au plan général de la fig. 1. Ces rotors comprennent également chacun un pignon. Ces pignons sont destinés à s'engager avec les premières roues de deux trains d'engrenages. Comme dans le brevet suisse no 613 837 déjà cité, un de ces trains d'engrenages peut servir à entraîner une aiguille des secondes et une aiguille des minutes, et l'autre peut servir à entraîner une aiguille des heures et un disque des dates. D'autres combinaisons des organes d'affichage peuvent bien entendu être prévues.

Pour ne pas charger inutilement le dessin, seuls les aimants permanents de ces rotors ont été représentés à la fig. 1, avec les références 19, respectivement 20. Dans la suite de cette description, les rotations des rotors seront assimilées aux rotations de ces aimants 19 et 20.

Les axes d'aimantation des aimants 19 et 20 sont symbolisés par des flèches 19a et 20a qui sont dirigées de leur pôle sud vers leur pôle nord. Ces axes d'aimantation sont évidemment perpendiculaires aux axes de rotation des rotors désignés par 19c et 20c.

Deux aimants de positionnement 21 et 22 en forme de barreaux aimantés longitudinalement sont disposés sur le stator 1, à l'emplacement de l'isthme 6, respectivement 12, de manière à être couplés magnétiquement avec l'aimant 19, respectivement 20. Les axes d'aimantation de ces aimants de positionnement 21 et 22 sont symbolisés par les flèches 21a et 22a qui sont dirigées de leur pôle sud vers leur pôle nord. Ces aimants 21 et 22 sont disposés de manière que les directions de ces axes 21a et 22a soient sensiblement confondues avec deux droites 31, respectivement 32, perpendiculaires aux axes de rotation 19c et 20c des rotors et passant par le milieu des épanouissements polaire 2a et 2b. En outre, ces axes 21a et 22a sont tous deux orientés dans un sens allant du milieu de l'épanouissement polaire 2a, respectivement 2b, vers l'axe de rotation 19c de l'aimant 19, respectivement du milieu de l'épanouissement polaire 2b vers l'axe de rotation 20c de l'aimant 20.

Le champ magnétique des aimants 21 et 22 exerce sur les aimants 19 et 20 un couple de positionnement ayant une période de 360° qui tend à ramener ou à maintenir ces aimants 19 et 20 dans la position de repos illustrée à la fig. 1. Dans cette position de repos, les axes d'aimantation 19a et 20a des aimants 19 et 20 sont confondus avec deux axes de repos fixes 19b et 20b qui sont portés par les droites 31, respectivement 32 et qui ont la même orientation que les axes d'aimantation 21a, respectivement 22a.

Dans l'exemple décrit par cette fig. 1, la pièce polaire 2 est plane et rectiligne, ce qui entraîne que les droites 31 et 32 sont confondues. Les deux axes de repos 19b et 20b sont donc alignés. Cette disposition n'est toutefois pas obligatoire. La pièce polaire 2 pourrait avoir une forme quelconque, plane ou non, pour laquelle les droites 31 et 32 ne seraient pas confondues.

Quelle que soit la forme de la pièce polaire 2, et donc quelle que soit la disposition relative des droites 31 et 32, l'axe de repos 19b doit être porté par la droite 31, et l'axe de repos 20b doit être porté par la droite 32. Pour remplir cette condition, les axes d'aimantation 21a et 22a peuvent évidemment être situés n'importe où sur ces droites 31, respectivement 32. Mais cette disposition n'est pas non plus obligatoire. Il est en effet facile de voir que, pour orienter l'axe de repos 19b dans la direction voulue, l'axe d'aimantation 21a peut se trouver pratiquement n'importe où dans un plan défini par l'axe de rotation 19c et par la droite 31. Les seules positions où cet axe d'aimantation 21a ne peut pas se trouver sont celles où il est confondu avec l'axe de rotation 19c.

Dans toutes les positions où il peut se trouver, cet axe d'aimantation 21a peut en outre être orienté dans toutes les direction pour lesquelles le champ de l'aimant 21 est tel que sa résultante dans la partie du plan défini ci-dessus située dans l'espace cylindrique 5 a une composante non nulle dans la direction souhaitée pour l'axe de repos 19b.

Les mêmes considérations peuvent être faites à propos de l'aimant de positionnement 22. L'axe d'aimantation 22a de cet aimant 22 peut donc se trouver pratiquement n'importe où dans un plan défini par l'axe de rotation 20c et par la droite 32, à l'exception des positions où cet axe d'aimantation 22a est confondu avec cet axe de rotation 20c. Cet axe d'aimantation 22a peut en outre être orienté dans toutes les directions pour lesquelles le champ de l'aimant 22 est tel que sa résultante dans la partie de ce plan située dans l'espace cylindrique 11 a une composante non nulle dans la direction souhaitée pour l'axe de repos 20b.

Il est évident que l'aimant de positionnement 21 doit être disposé de manière à exercer une force plus importante sur l'aimant 19 que sur l'aimant 20, et que réciproquement l'aimant de positionnement 22 doit être disposé de manière à exercer une force plus importante sur l'aimant 20 que sur l'aimant 19.

Il découle des considérations ci-dessus que les deux aimants de positionnement 21 et 22 pourraient être remplacés par un aimant unique ayant un axe d'aimantation disposé sur une droite sensiblement perpendiculaire à la pièce polaire 2 et coupant celle-ci en un point situé approximativement à mi-chemin entre les milieux des épanouissements polaires 2a et 2b. Ce cas n'est pas illustré.

Dans tous les cas où l'aimant de positionnement 21, par exemple, n'est pas situé exactement dans le même plan que l'aimant 19, la force qu'il exerce sur ce dernier a une composante parallèle à l'axe de rotation 19c. Cette composante axiale entraîne une augmentation du frottement de l'un des pivots du rotor comprenant cet aimant 19 dans son palier. Cet inconvénient peut être évité par l'adjonction d'un autre aimant de positionnement semblable à l'aimant 21 et situé à un emplacement tel que son axe d'aimantation soit sensiblement symétrique de l'axe d'aimantation 21a par rapport à la droite 31. Cet autre aimant de positionnement exerce ainsi sur l'aimant 19 une force dont la composante dirigée selon l'axe de rotation 19c annule ou au moins diminue l'effet de celle qui est due à l'aimant 21.

Il est évident que des considérations semblables peuvent être faites à propos de la force exercée par l'aimant de positionnement 22 sur l'aimant 20, et qu'un autre aimant de positionnement ayant un axe d'aimantation sensiblement symétrique de l'axe d'aimantation 22a par rapport à la droite 32 permet également d'annuler ou de diminuer la force axiale exercée par l'aimant 22 sur l'aimant 20.

La fig. 1a est une coupe d'un exemple de moteur comportant ces aimants de positionnement supplémentaires. Tous les autres éléments de ce moteur sont identiques aux éléments correspondants du moteur de la fig. 1 et sont désignés par les mêmes références. La coupe de cette fig. 1a passe par les deux axes de rotation 19c et 20c, et les aimants de positionnement supplémentaires et leux axes d'aimantation sont désignés par les références 21′ et 21a′, respectivement 22′ et 22a′.

Lorsqu'un courant traverse la bobine 16, par exemple, le champ magnétique créé par ce courant suit un circuit magnétique qui comporte, en série, l'armature 15, la pièce polaire 3, l'espace cylindrique 5 entre l'épanouissement polaire 3a et les épanouissements polaires 2a et 4a, un ensemble formé par la mise en parallèle de la pièce polaire 2 d'une part et de la pièce polaire 4, de l'armature 17 et de la pièce polaire 10 d'autre part, l'espace cylindrique 11 entre les épanouissement polaires 2b et 10a et l'épanouissement polaire 9a, et la pièce polaire 9. Ce champ traverse évidemment les aimants 19 et 20.

Les lignes de force de ce champ magnétique ont été symbolisées par la ligne pointillée 23. Pour ne pas charger inutilement le dessin, ces lignes de force n'ont pas été représentées dans la partie du circuit formée de la pièce polaire 4, de l'armature 17 et de la pièce polaire 10.

La flèche désignée par 23a symbolise la résultante du champ créé dans l'espace 5, entre l'épanouissement polaire 3a et les épanouissements polaires 2a et 4a, par un courant circulant dans la bobine 16. De même, la flèche désignée par 23b symbolise la résultante de ce champ dans l'espace 11, entre l'épanouissement polaire 9a et les épanouissements polaires 2b et 10a. Le sens de ces flèches 23a et 23b désigne le sens du champ créé par la bobine 16 en réponse à un courant défini arbitrairement comme positif. Ce champ est tel que l'épanouissement polaire 3a agit comme un pôle nord et l'épanouissement polaire 9a agit comme un pôle sud. Ce champ a évidemment le sens inverse lorsque la bobine 16 est parcourue par un courant de sens inverse, c'est-à-dire négatif. L'épanouissement polaire 3a agit alors comme un pôle sud et l'épanouissement polaire 9a agit comme un pôle nord.

Des considérations similaires peuvent être faites à propos du champ créé par le passage d'un courant dans la bobine 18. La ligne pointillée 24 symbolise les lignes de force de ce champ et les flèches 24a et 24b représentent ce champ dans les espaces cylindriques 5 et 11, avec le sens qu'il a lorsqu'un courant qualifié arbitrairement de positif est envoyé dans la bobine 18. L'épanouissement polaire 4a agit alors comme un pôle nord et l'épanouissement polaire 10a agit comme un pôle sud. Lorsque le courant dans la bobine 18 est négatif, ce champ a évidemment le sens inverse et l'épanouissement polaire 4a agit comme un pôle sud et l'épanouissement polaire 10a agit comme un pôle nord.

Il est important de noter que lorsque la bobine 16 est parcourue par un courant positif, le champ qu'elle créé dans les espaces 5 et 11 et qui est représenté par les flèches 23a et 23b forme un angle obtus avec l'axe de repos 19b, et un angle aigu avec l'axe de repos 20b. En outre, ce champ est sensiblement perpendiculaire aux axes de rotation 19c et 20c.

De même, lorsque la bobine 18 est parcourue par un courant positif, le champ qu'elle crée également dans les espaces 5 et 11 et qui est représenté par les flèches 24a et 24b forme aussi avec l'axe de repos 19b un angle obtus et avec l'axe de repos 20b un angle aigu. Ce champ est également sensiblement perpendiculaire aux axes de rotation 19c et 20c.

La fig. 1 illustre ces deux cas.

Il est évident que chaque angle mentionné ci-dessus, ainsi que chacun de ceux qui seront mentionnés plus loin, est l'angle que formeraient les flèches représentant le champ et l'axe de repos si l'un des deux était déplacée parallèlement à elle-même jusqu'à ce que son origine coïncide avec l'origine de l'autre.

Si le sens du courant dans les bobines 16 et 18 est inversé, les champs qu'elles produisent forment dans l'espace 5 un angle aigu avec l'axe de repos 19b, et dans l'espace 11 un angle obtus avec l'axe de repos 20b. Ce cas n'est pas illustré, mais il se déduit facilement de la fig. 1 par une simple inversion des flèches 23a, 23b, 24a et 24b.

Les épanouissements polaires 2a et 2b sont chacun sensiblement symétriques par rapport aux axes de repos 19b, respectivement 20b. En outre, les épanouissements polaires 3a et 4a sont sensiblement symétriques l'un de l'autre par rapport à l'axe de repos 19b, et les épanouissements polaires 9a et 10a sont sensiblement symétriques l'un de l'autre par rapport à l'axe de repos 20b. Il découle de cette disposition des épanouissements polaires que les angles formés entre les axes de repos et les champs créés par les bobines 16 et 18 sont symétriques par rapport à ces axes de repos lorsque les courants dans ces bobines ont le même sens. La grandeur de ces différents angles dépend notamment de l'angle occupé autour des espaces 5 et 11 par chacun des épanouissements polaires 2a, 3a, 4a et 2b, 9a et 10a.

En pratique, les angles obtus formés dans l'un ou l'autre des espaces cylindriques par les axes de repos et les champs créés par les bobines peuvent avoir une valeur comprise entre 100° environ et 160° environ. De préférence, cette valeur est sensiblement égale à 120°.

Les angles aigus formés par ces axes et ces champs ont donc une valeur comprise entre 20° environ et 80° environ. La valeur préférentielle de 120° pour les angles obtus correspond à une valeur de 60° pour les angles aigus.

Le fonctionnement du moteur représenté à la fig. 1 va maintenant être décrit à l'aide de la fig. 2.

Cette fig. 2 représente un tableau dans lequel la ligne A correspond à l'état de repos du moteur. Chacune des autres lignes B à M correspond à une étape de la commande du moteur.

Les signes + ou − inscrits dans les colonnes désignés par I16 et I18 indiquent qu'un courant positif, respectivement négatif, est envoyé dans la bobine 16 ou la bobine 18 à l'étape correspondante. L'absence de signe indique bien sûr qu'aucun courant ne circule dans la bobine 16 ou la bobine 18.

Les flèches dessinées dans les colonnes dèsignées par C5 et C11 indiquent le sens et la direction du champ créé dans l'espace cylindrique 5, respectivement dans l'espace cylindrique 11, par le courant mentionné dans la colonne I16 ou I18 à la même ligne.

Pour simplifier la description qui va suivre, il ne sera question que de la rotation des aimants 19 et 20. Les rotors dont ces aimants font partie exécutent évidemment les mêmes rotations.

Les positions que les aimants 19 et 20 prennent en réponse aux champs indiqués aux colonnes C5 et C11 ou sous l'influence du couple de positionnement sont repérées dans les colonnes R19 et R20 par des flèches en traits pleins rappelant les axes d'aimantation 19a et 20a. A la ligne A, ces flèches représentent donc également les axes de repos 19b et 20b. Les flèches dessinées en pointillés dans ces colonnes R19 et R20 rappellent la position que les axes d'aimantation 19a et 20a occupaient avant de prendre la position indiquée par les flèches en traits pleins.

Enfin, les valeurs des angles aigus et des angles obtus dont il a été question ci-dessus ont été choisies arbitrairement égales à 45° et à 135° dans cette fig. 2, pour rendre le dessin plus clair. Ces valeurs ne sont données qu'à titre d'exemple non limitatif.

La ligne A du tableau de la fig. 2 correspond à la position de repos du moteur. Aucun courant ne circule dans bobines 16 et 18, et les axes d'aimantation 19a et 20a sont confondus avec les axes de repos 19b et 20b.

Les lignes B, C et D résument la manière de commander le moteur pour que l'aimant 19, et donc le rotor dont il fait partie, fasse un pas, c'est-à-dire un tour complet, dans le sens de la flèche 25 de la fig. 1. Ce sens est choisi arbitrairement comme sens de rotation positif pour cet aimant.

Un courant positif est tout d'abord envoyé dans la bobine 16 par un circuit de commande dont un exemple sera décrit plus loin (ligne B). Le champ créé par ce courant dans l'espace cylindrique 5 a le sens et la direction indiqués à la colonne C5. Si l'intensité du courant dans la bobine 16 est suffisante, l'aimant 19 tourne jusqu'à ce que son axe d'aimantation 19a devienne parallèle à ce champ. Comme, dans ce cas, le champ symbolisé à la colonne C5 fait avec l'axe de repos 19b un angle obtus, l'aimant 19 tourne d'un angle supérieur à 90° dans le sens positif.

Lorsque l'aimant 19 atteint, au moins approximativement, la position indiquée à la colonne R19, le circuit de commande interrompt le courant dans la bobine 16, et envoie un courant également positif dans la bobine 18 (ligne C). Le champ créé par ce courant dans l'espace cylindrique 5 a le sens et la direction indiqués à la colonne C5. L'aimant 19 poursuit donc sa rotation dans le sens positif jusqu'à ce que son axe d'aimantation 19a devienne parallèle à ce champ. Cette position est indiquée à la colonne R19.

Lorsque l'aimant 19 atteint cette position, au moins approximativement, le circuit de commande interrompt le courant dans la bobine 18 (ligne D). L'aimant 19 est alors soumis uniquement au champ de l'aimant de positionnement 21 qui lui fait terminer sa rotation. L'aimant 19 reprend donc sa position de repos après avoir fait un tour complet dans le sens positif en réponse à une paire d'impulsions de courant positives dont la première est envoyée à la bobine 16 et la deuxième à la bobine 18.

Il est évident que chaque fois qu'une telle paire d'impulsions de courant positives sera appliquée aux bobines 16 et 18, dans cet ordre, l'aimant 19, et donc le rotor dont il fait partie, fera à nouveau un tour complet dans le sens positif.

Les champs créés par les courants envoyés dans les bobines 16 et 18 pour faire tourner l'aimant 19 traversent également l'espace cylindrique 11. Leur sens et leur direction sont rappelés à la colonne C11. L'aimant 20 tourne donc également en réponse à la première impulsion de courant envoyée dans la bobine 16, d'un angle égal à l'angle formé par le champ créé par cette impulsion de courant avec l'axe de repos 20b, jusqu'à la position rappelée dans la colonne R20 à la ligne B. Cet angle est un angle aigu, et lorsque le courant dans la bobine 16 est interrompu et qu'un courant est envoyé dans la bobine 18, l'aimant 20 commence à tourner en sens inverse du précédent. Il repasse par sa position de repos et atteint la position rappelée à la ligne C. Dans cette position, son axe d'aimantation 20a fait également un angle aigu avec son axe de repos 20b. Lorsque, à l'étape représentée par la ligne D, le courant dans la bobine 18 est interrompu, l'aimant 20 reprend donc sa position de repos sous l'influence du couple de positionnement créé par l'aimant 22.

L'aimant 20 n'effectue donc qu'un mouvement de balancement autour de sa position de repos en réponse à la paire d'impulsions de courant positives qui est envoyée dans les bobines 16 et 18 pour faire tourner l'aimant 19.

Les lignes E, F et G du tableau de la figure 2 résument la manière de commander le moteur pour que l'aimant 19 tourne d'un pas dans le sens négatif.

Le circuit de commande envoie tout d'abord un courant positif dans la bobine 18 (ligne E). Le champ produit par ce courant dans l'espace cylindrique 5 est symbolisé à la colonne C5, et l'aimant 19 tourne dans son sens négatif jusqu'à la position indiquée à la colonne R19. A nouveau, l'aimant 19 tourne d'un angle supérieur à 90° puisque le champ créé par un courant positif dans la bobine 18 fait un angle obtus avec l'axe de repos 19b.

Lorsque l'aimant 19 atteint, au moins approximativement, la position indiquée à la colonne R19, le circuit de commande interrompt le courant dans la bobine 18 et envoie un courant également positif dans la bobine 16 (ligne F). L'aimant 19 poursuit donc sa rotation en sens négatif, jusqu'à ce que son axe d'aimantation 19a soit parallèle à la direction du champ indiqué à la colonne C5.

Le circuit de commande interrompt alors le courant dans la bobine 16 et l'aimant 19 termine sa rotation en réponse au couple de positionnement créé par l'aimant 21.

L'aimant 19 a donc fait un tour complet dans le sens négatif en réponse à une paire d'impulsions de courant positives dont la première est envoyée à la bobine 18 et la deuxième à la bobine 16.

Il est facile de voir que, dans ce cas également, l'aimant 20 n'effectue qu'un mouvement de balancement autour de sa position de repos en réponse à ces deux impulsions de courant positives.

Les lignes H, I et J du tableau de la fig. 2 résument la manière de commander le moteur pour que l'aimant 20 fasse un pas, c'est-à-dire également un tour complet, dans le sens de la flèche 26 de la fig. 1, qui est choisi arbitrairement comme sens de rotation positif pour cet aimant 20.

Le circuit de commande envoie tout d'abord un courant négatif dans la bobine 16 (ligne H). Le champ créé par ce courant dans l'espace cylindrique 11 a donc le sens inverse de celui qui est indiqué à la fig. 1 par la flèche 23b. Ce champ est rappelé à la colonne C11. Il fait dans ce cas un angle obtus avec l'axe de repos 20b, et l'aimant 20 tourne donc d'un angle supérieur à 90° dans le sens positif.

Lorsque l'aimant 20 atteint, au moins approximativement, la position indiquée à la colonne R20, le circuit de commande interrompt le courant dans la bobine 16 et envoie un courant, également négatif, dans la bobine 18 (ligne I). Le champ créé par ce courant dans l'espace cylindrique 11 est rappelé à la collone C11. L'aimant 20 poursuit donc sa rotation dans le sens positif jusqu'à ce qu'il atteigne la position indiquée à la colonne R20.

Le circuit de commande interrompt alors le courant dans la bobine 18 (ligne J), et l'aimant 20 termine sa rotation sous l'influence du couple de positionnement.

L'aimant 20 a donc fait un pas en sens positif en réponse à une paire d'impulsions de courant négatives dont la première est envoyée à la bobine 16 et la deuxième à la bobine 18.

Il est facile de voir que, dans ce cas, les champs créés par ces impulsions de courant négatives dans les bobines 16 et 18 font un angle aigu avec l'axe de repos 19b de l'aimant 19. Ce dernier n'effectue donc qu'un mouvement de balancement de part et d'autre de sa position de repos en réponse à ces impulsions de courant négatives.

Les lignes K, L et M du tableau de la fig. 2 résument la manière de commander le moteur pour que l'aimant 20 fasse un pas en sens négatif.

Le circuit de commande envoie tout d'abord un courant négatif dans la bobine 18 (ligne K). Le champ créé par ce courant dans l'espace cylindrique 11 est rappelé à la colonne C11. L'aimant 20 tourne d'un angle supérieur à 90° dans le sens négatif jusqu'à ce qu'il atteigne la position indiquée à la colonne R20.

Le circuit de commande interrompt alors le courant dans la bobine 18 et envoie un courant également négatif dans la bobine 16 (ligne L). L'aimant 20 continue donc sa rotation en sens négatif sous l'influence du champ rappelé à la colonne C11, jusqu'à ce qu'il atteigne la position indiquée à la colonne R20.

Le circuit de commande interrompt alors le courant dans la bobine 16 (ligne M), et l'aimant 20 termine son pas sous l'influence du couple de positionnement.

L'aimant 20 a donc fait un pas dans le sens négatif en réponse à une paire d'impulsions de courant négatives dont la première est envoyée à la bobine 18 et la deuxième à la bobine 16.

Il est facile de voir que dans ce cas également, l'aimant 19 n'effectue qu'un mouvement de balancement autour de sa position d'équilibre.

Dans l'exemple décrit ci-dessus, les aimants de positionnement 21 et 22 sont disposés de manière que les axes de repos 19b et 20b aient tous les deux un sens allant du milieu de l'épanouissement polaire 2a, respectivement 2b vers l'axe de rotation 19c, respectivement 20c. Il est évident que ces aimants de positionnement 21 et 22 pourraient être disposés de manière que les axes de repos 19b et 20b aient tous les deux le sens inverse. Dans ce cas le champ produit dans les espaces cylindriques 5 et 11 par un courant ayant le sens défini ci-dessus comme positif circulant dans la bobine 16 ou dans la bobine 18 ferait un angle aigu avec l'axe de repos 19b et un angle obtus avec l'axe de repos 20b. Réciproquement, le champ produit dans les espaces cylindriques 5 et 11 par un courant négatif circulant dans la bobine 16 ou dans la bobine 18 ferait un angle obtus avec l'axe de repos 19b, et un angle aigu avec l'axe de repos 20b. Les paires d'impulsions de courant positives décrites ci-dessus provoqueraient donc la rotation de l'aimant 20, et les paires d'impulsions de courant négatives provoqueraient la rotation de l'aimant 19. Le sens de rotation de ces aimants serait également positif si la première impulsion de chaque paire était appliquée à la bobine 16, et ce sens de rotation serait négatif si cette première impulsion était appliquée à la bobine 18.

En résumé, on voit que les deux aimants, et donc les rotors dont ils font partie, sont commandés individuellement et pas à pas par des paires d'impulsions de courant de même sens dont la première est appliquée à une des bobines et la deuxième est appliquée à l'autre bobine. Le sens de ces impulsions de courant détermine lequel des aimants fait un pas, et l'ordre dans lequel elles sont appliquées aux bobines détermine le sens de rotation de cet aimant.

Dans l'exemple de commande du moteur décrit ci-dessus, la fin de la première impulsion de chaque paire coïncide avec le début de la deuxième impulsion. Selon la charge mécanique que doit entraîner le moteur, il est possible d'enclencher la deuxième impulsion de chaque paire un instant avant ou après la fin de la première impulsion. Dans le premier cas, le couple fourni par le moteur est augmenté, au prix d'une légère augmentation de sa consommation. Dans le second cas, au contraire, la consommation du moteur est diminuée au prix d'une légère diminution du couple qu'il peut fournir.

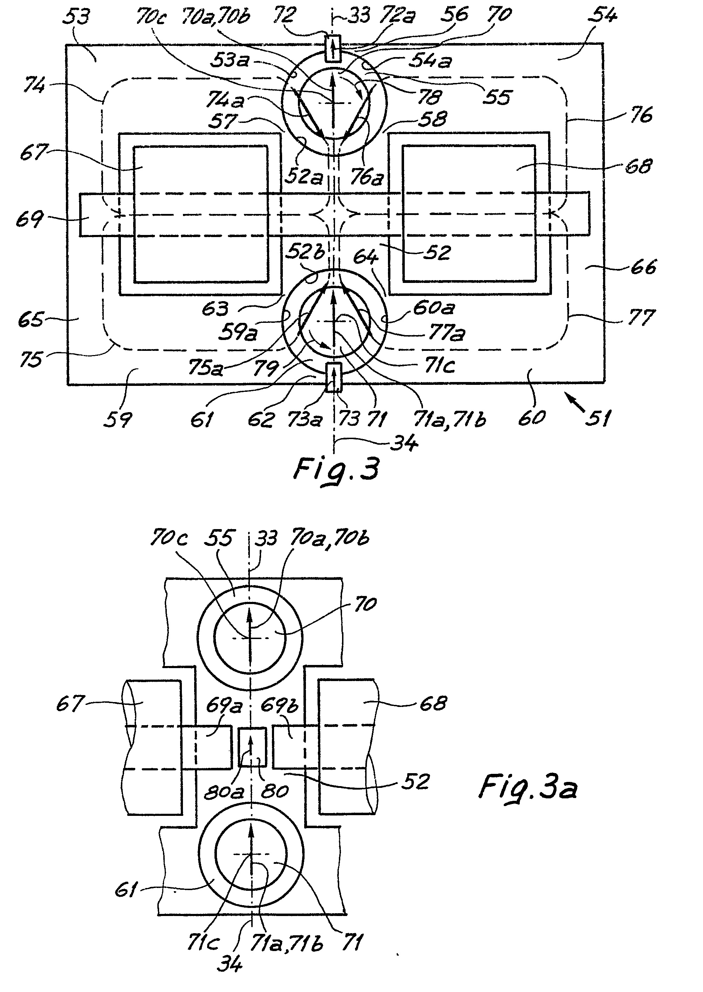

La fig. 3 est une vue en plan d'une autre forme d'exécution de l'organe moteur selon l'invention.

Le moteur représenté à la fig. 3 comporte un stator 51 constitué, comme celui de la fig. 1, d'une plaque en matériau magnétique doux. Ce stator 51 comporte une première pièce polaire 52 dont les extrémités sont découpées en arcs de cercle concaves et forment deux épanouissements polaires 52a et 52b.

Le stator 51 comprend deux autres pièces polaires 53 et 54 ayant chacune une extrémité découpée en arc de cercle concave et formant deux épanouissements polaires 53a et 54a. Les épanouissements polaires 52a, 53a et 54a délimitent un espace cylindrique 55, et ils sont réunis par des isthmes 56, 57 et 58.

Le stator 51 comprend encore deux pièces polaires 59 et 60 ayant chacune une extrémité découpée en arc de cercle et formant un épanouissement polaire 59a, respectivement 60a. Les épanouissements polaires 52b, 59a et 60a, délimitent un deuxième espace cylindrique 61, et ils sont réunis par des isthmes 62, 63 et 64.

Comme dans la forme d'exécution de la figure 1, ces isthmes 56, 57, 58, 62, 63 et 64, qui forment une seule pièce avec les pièces polaires 52, 53, 54, 59 et 60, pourraient être supprimés ou remplacés par des pièces en matériau non magnétique.

Les extrémités des pièces polaires 53 et 59 opposées aux épanouissements polaires 53a et 59a sont reliées par une armature 65 qui, dans le cas décrit, ne forme qu'une seule pièce avec elles.

De même, les extrémités des pièces polaires 54 et 60 opposées aux épanouissements polaires 54a et 60a sont réunies par une armature 66 qui forme également une seule pièce avec elles.

Dans la forme d'exécution de cette figure 3, le moteur comporte également deux bobines désignées par les références 67 et 68. Ces bobines 67 et 68 sont montées sur un noyau commun 69 qui est fixé, d'une manière non représentée, aux armatures 65 et 66 et à la pièce polaire 52.

Dans une variante de cette forme d'exécution, partiellement représentée à la figure 3a, le noyau 69 commun aux bobines 67 et 68 est remplacé par deux noyaux distincts 69a et 69b. Une première extrémité de chacun de ces noyaux 69a et 69b est reliée à la pièce polaire 52, et leur deuxième extrémité, non représentée dans cette figure 3a, est reliée à l'armature 65, respectivement à l'armature 66.

Le moteur comporte deux rotors qui, comme dans le cas de la fig. 1, ne sont représentés que par les aimants 70 et 71 qui en font partie.

Deux aimants de positionnement 72 et 73 en forme de barreaux aimantés longitudinalement sont disposés sur le stator 51 à proximité des aimants 70 et 71, à l'emplacement des isthmes 56 et 62, de manière à être couplés magnétiquement avec l'aimant 70, respectivement 71. Ces aimants 72 et 73 sont disposés de manière que les directions de leurs axes d'aimantation 72a et 73a soient sensiblement confondues avec deux droites 33, respectivement 34, perpendiculaires aux axes de rotation 70c, respectivement 71c, et passant par le milieu des épanouissements polaires 52a, respectivement 52b. En outre, l'axe d'aimantation 72 est orienté dans un sens allant du milieu de l'épanouissement polaire 52a vers l'axe de rotation 70c, alors que l'axe d'aimantation 73a est orienté dans un sens allant de l'axe de rotation 71c vers le milieu de l'épanouissement polaire 52b.

En l'absence de toute influence extérieure, les aimants 70 et 71 sont donc chacun soumis à un couple de positionnement qui maintient leur axe d'aimantation 70a et 71a dans la position qu'il a à la fig. 3. Dans cette position, ces axes d'aimantation 70a et 71a coïncident avec des axes de repos 70b et 71b. Comme dans le cas de la fig. 1, ces axes de repos passent sensiblement par le milieu des épanouissements polaires 52a, respectivement 52b, et par les axes de rotation 70c et 71c des aimants 70 et 71, c'est-à-dire que leur direction coïncide avec les droites 33, respectivement 34. Leur sens est bien entendu identique au sens des axes d'aimantation 72a et 73a.

Dans une autre variante de cette forme d'exécution, qui est également représentée à la figure 3a, les deux aimants de positionnement 72 et 73 sont remplacés par un aimant unique 80. Cet aimant 80 est disposé sur la pièce polaire 52 de manière que son axe d'aimantation 80a soit porté par une ligne joignant les milieux des épanouissements polaires 52a et 52b.

Les couples de positionnement exercés par cet aimant 80 sur les aimants 70 et 71 sont identiques à ceux qui sont créés par les aimants 72 et 73 dans le cas de la figure 3. Les axes de repos 70b et 71b sont donc également identiques à ceux de la figure 3.

Il faut noter que cette variante et la variante décrite ci-dessus peuvent être réalisées indépendamment l'une de l'autre. Elles n'ont été représentées ensemble que pour éviter d'augmenter inutilement le nombre des figures.

Dans l'exemple décrit par la fig. 3, la pièce polaire 52 est plane et rectiligne, ce qui entraîne que les droites 33 et 34 sont confondues. Comme dans le cas de la fig. 1, cette disposition n'est pas obligatoire et la pièce polaire 52 pourrait avoir une forme quelconque, plane ou non, pour laquelle les droites 33 et 34 pourraient ne pas être confondues.

Des considérations semblables à celles qui ont été faites à propos de la fig. 1 montrent que dans le moteur décrit par cette fig. 3, l'axe d'aimantation 72a de l'aimant 72 pourrait se trouver pratiquement n'importe où dans un plan défini par l'axe de rotation 70c et par la droite 33, et l'axe d'aimantation 73a de l'aimant 73 pourrait se trouver pratiquement n'importe où dans un autre plan défini par l'axe de rotation 71c et par la droite 34. A nouveau, les seules positions où ces axes d'aimantation 72a et 73a ne peuvent pas se trouver sont celles où ils sont confondus avec les axes de rotation 70c, respectivement 71c.

De même, ces axes d'aimantation 72a et 73a peuvent être orientés dans toutes les directions pour lesquelles le champ de l'aimant 72, respectivement 73, est tel que sa résultante dans la partie du plan correspondant située dans l'espace cylindrique 55, respectivement 61, a une composante non nulle dans la direction souhaitée pour l'axe de repos 70b, respectivement 71b.

Il est évident que, dans ce cas également, l'aimant de positionnement 72 doit être disposé de manière à exercer sur l'aimant 70 une force plus grande que sur l'aimant 71, et que l'aimant 73 doit être disposé de manière à exercer sur l'aimant 71 une force plus grande que sur l'aimant 70.

Dans le cas décrit par la fig. 3a où les aimants de positionnement 72 et 73 sont remplacés par un aimant unique 80, des considérations semblables à celles qui ont été faites ci-dessus montrent que cet aimant de positionnement 80 peut également être disposé de manière que son axe d'aimantation 80a soit situé dans un plan contenant les deux axes de rotation 70c et 71c. Cet axe d'aimantation 80a doit en outre être situé pratiquement à égale distance de ces axes de rotation 70c et 71c, et il peut prendre n'importe laquelle des orientations pour lesquelles son champ est tel que sa résultante dans les parties de ce plan situées dans les espaces cylindriques 55 et 61 a une composante non nulle dans la direction souhaitée pour les axes de repos 70b et 71b.

Comme dans le cas de la fig. 1, les composantes axiales des forces exercées par les aimants de positionnement 72 et 73 peuvent être annulées par des aimants de positionnement supplémentaires dont les axes d'aimantation sont symétriques des axes d'aimantation 72a et 73a par rapport aux droites 33, respectivement 34.

La fig. 3b est une coupe d'un moteur semblable au moteur de la fig. 3 comportant ces aimants de positionnement supplémentaires. Tous les autres éléments de ce moteur sont identiques aux éléments correspondants du moteur de la fig. 3 et sont désignés par les mêmes références. La coupe de cette fig. 3b passe par les deux axes de rotation 70c et 71c, et les aimants de positionnement supplémentaires et leurs axes d'aimantation sont désignés par les références 72' et 72a', respectivement 73' et 73a'.

Dans le cas d'un moteur tel que celui de la fig. 3a, un aimant de positionnement supplémentaire disposé de manière que son axe d'aimantation soit symétrique de l'axe d'aimantation 80a par rapport à la pièce polaire 52 permet également d'annuler la composante axiale de la force exercée par l'aimant 80 sur les aimants 70 et 71. La fig. 3c est une coupe d'un moteur comportant cet aimant supplémentaire par un plan contenant les deux axes de rotation 70c et 71c. Cet aimant supplémentaire et son axe d'aimantation sont désignés par les références 80' et 80'a. Tous les autres éléments de ce moteur sont identiques à ceux du moteur de la fig. 3a et sont désignés par les mêmes références.

Dans le moteur de la figure 3 et dans ses variantes, le champ magnétique produit par la bobine 67 en réponse à un courant se répartit dans l'armature 65 de part et d'autre du noyau 69 et dans les pièces polaires 53 et 59. La majeure partie de ce champ retourne au noyau 69 par la pièce polaire 52 après avoir traversé les espaces cylindriques 55 et 61. Une petite partie de ce champ retourne au noyau 69 à travers les pièces polaires 54 et 60 et l'armature 66. Les lignes de force de ce champ magnétique sont symbolisées par les lignes pointillées 74 et 75 et les flèches 74a et 75a indiquent la direction et le sens de sa résultante dans les espaces cylindriques 55 et 61 lorsqu'un courant, défini arbitrairement comme positif, traverse la bobine 67.

La bobine 68 produit un champ magnétique similaire lorsqu'elle est parcourue par un courant. Les lignes de force de ce champ sont symbolisées par les lignes pointillées 76 et 77, et les flèches 76a et 77a indiquent la direction et le sens de sa résultante dans les espaces cylindriques 55 et 61 lorsque le courant dans la bobine 68 est positif.

Grâce à la disposition relative des divers épanouissements polaires et des deux aimants de positionnement, le champ produit par la bobine 67 fait toujours un angle obtus avec l'un des axes de repos 70b et 71b et un angle aigu avec l'autre axe de repos. Il en est de même pour le champ produit par la bobine 68. Les valeurs pratiques et préférentielles de ces angles sont les mêmes que dans la forme d'exécution de la figure 1.

Il est évident que ces considérations s'appliquent également aux cas des variantes illustrées par les fig. 3a, 3b et 3c.

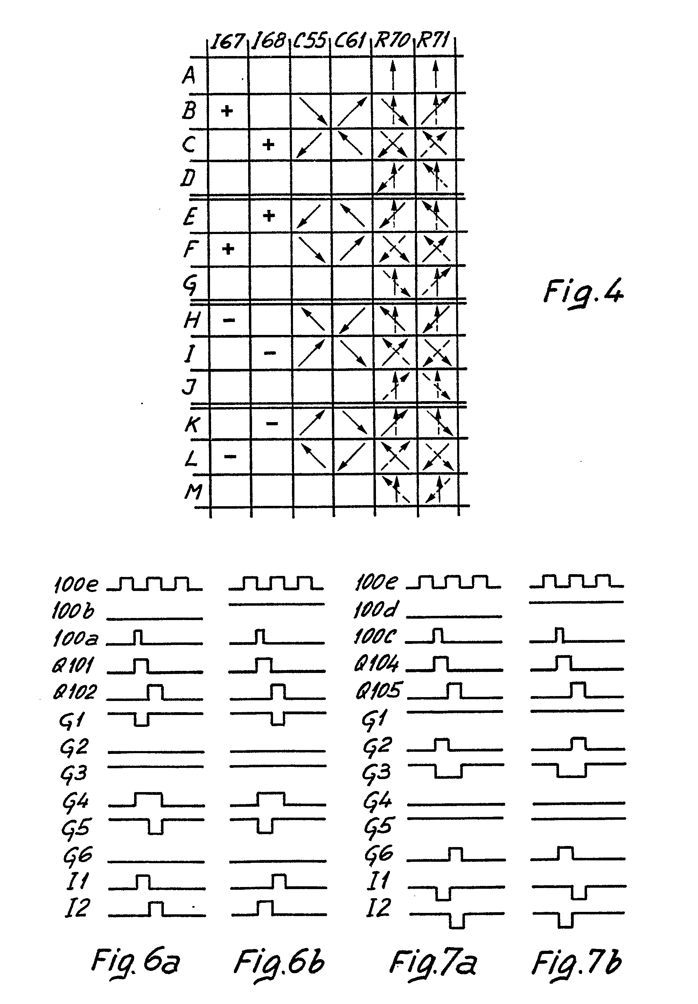

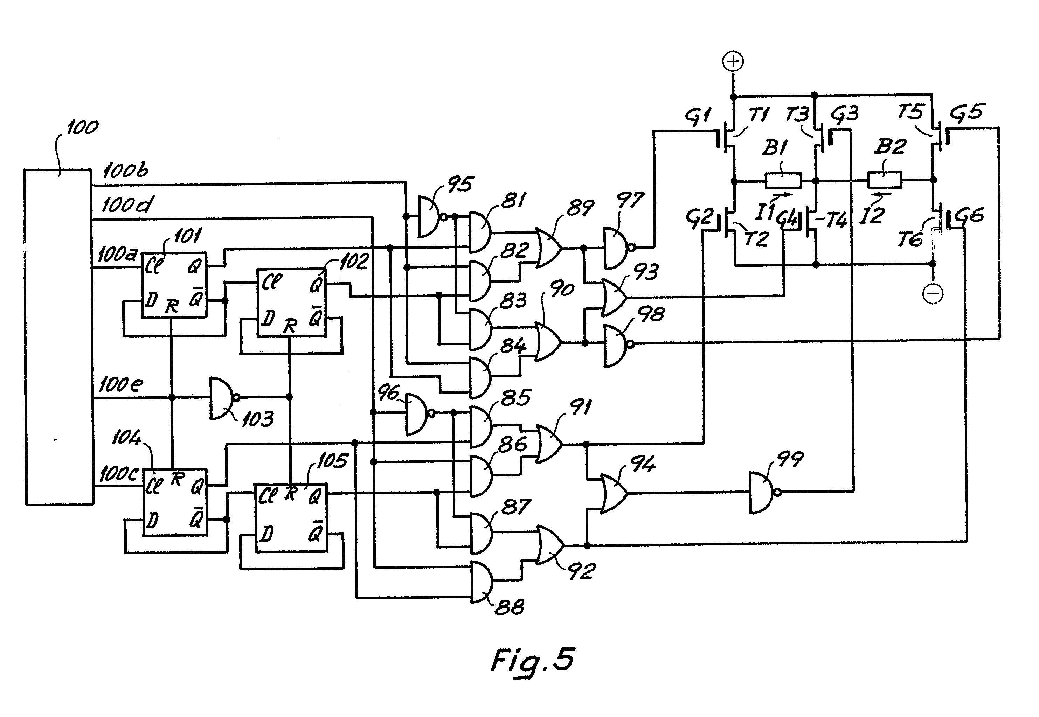

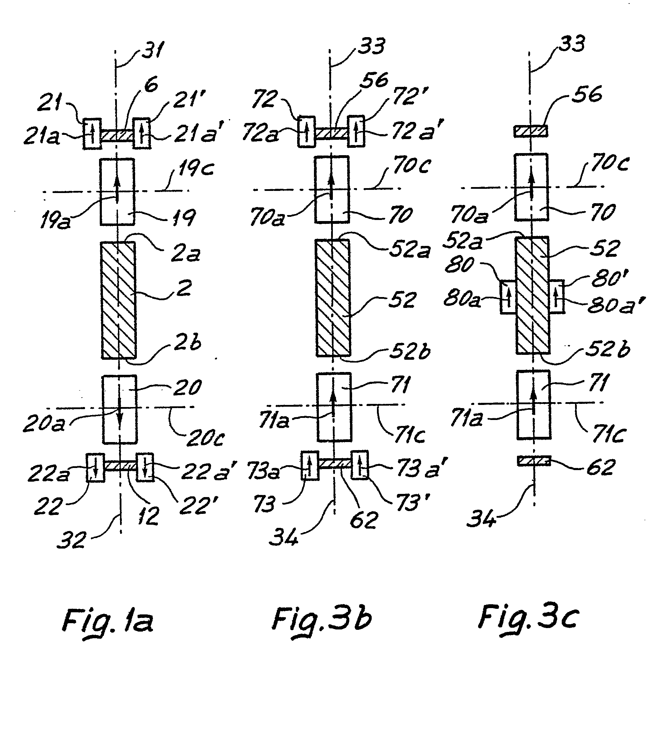

La fig. 4 est un tableau qui résume le fonctionnement du moteur de la fig. 3. Comme dans le tableau de la fig. 2, la ligne A correspond à l'état de repos du moteur, les lignes B, C et D, et E, F et G résument la manière de commander le moteur pour que l'aimant 70 fasse un tour dans le sens de la flèche 78 choisi arbitrairement comme sens positif, respectivement dans le sens inverse, et les lignes H, I et J, et K, L et M résument la manière de commander le moteur pour que l'aimant 71 fasse un tour dans le sens de la flèche 79 choisi également arbitrairement comme sens positif, respectivement dans le sens inverse.

Les signes + et − inscrits dans les colonnes désignées par I67 et I68 indiquent qu'un courant positif, respectivement négatif, est envoyé dans la bobine 67 ou 68. Les flèches dessinées dans les colonnes C55 et C61 indiquent la direction et le sens de la résultante du champ créé par ces courants dans les espaces cylindriques 55 et 61. Enfin, les flèches en traits pleins dans les colonnes désignées par R70 et R71 indiquent les positions que prennent les axes d'aimantation 70a et 71a des aimants 70 et 71 en réponse à ces champs ou sous l'influence du couple de positionnement créé par les aimants 72 et 73, alors que les flèches en pointillés rappellent la position précédente de ces axes d'aimantation 70a et 71a.

Les diverses étapes de la commande du moteur de la fig. 3 résumées par la fig. 4 sont semblables aux étapes correspondantes de la commande du moteur de la fig. 1. Elles ne seront pas décrites en détail. Il est en effet facile de voir que, comme dans le cas du moteur de la fig. 1, l'aimant 70 tourne d'un pas en réponse à chaque paire d'impulsions de courant positives appliquées aux bobines 67 et 68, et que l'aimant 71 tourne d'un pas en réponse à chaque paire d'impulsions de courant négatives appliquées à ces bobines. Ces aimants 70 et 71 tournent en sens positif lorsque la première impulsion d'une paire est appliquée à la bobine 67 et en sens négatif lorsque cette première impulsion est appliquée à la bobine 68.

Il est également facile de voir que si les aimants de positionnement 72 et 73 étaient disposés de manière que les axes de repos 70b et 71b soient tous deux orientés dans le sens inverse de celui qu'ils ont à la fig. 3, ce serait l'aimant 71 qui tournerait d'un pas en réponse à chaque paire d'impulsions de courant positives, et l'aimant 70 qui tournerait d'un pas en réponse à chaque paire d'impulsions de courant négatives. Le sens de rotation de ces aimants 70 et 71 serait le même que celui qui a été décrit ci-dessus.

En résumé, comme dans le cas de la fig. 1, les deux aimants du moteur de la fig. 3 sont commandés individuellement et pas à pas par des paires d'impulsions de courant de même sens dont la première est appliquée à une des bobines et la deuxième est appliquée à l'autre bobine. Le sens de ces impulsions de courant détermine lequel des aimants fait un pas, et l'ordre dans lequel elles sont appliquées aux bobines détermine les sens de rotation de cet aimant.

Il est évident que, dans ce cas également, la deuxième impulsion de chaque paire peut être enclenchée un instant avant ou après la fin de la première impulsion, avec les mêmes conséquences que dans la commande du moteur de la figure 1.

La fig. 5 représente le schéma d'un exemple de circuit destiné à commander un moteur selon l'invention, et les fig. 6a, 6b, 7a et 7b sont des diagrammes des signaux mesurés en quelques points de ce circuit dans les quatre cas de commande possibles.

Le moteur, qui peut être l'un quelconque des moteurs décrits ci-dessus, est représenté dans cette figure 5 par ses deux bobines désignées par B1 et B2. Ces bobines B1 et B2 sont branchées dans un double pont formé de six transistors à effet de champ désignés par T1 à T6. Les transistors T1, T3 et T5 sont de type P et ont leur source reliée au pôle positif de la source d'alimentation du circuit, non représentée. Les transistors T2, T4 et T6 sont de type N et ont leur source reliée au pôle négatif de la source d'alimentation.

Les drains des transistors T1 et T2 sont reliés, ensemble, à une des bornes de la bobine B1, les drains des transistors T5 et T6 sont reliés, ensemble, à une des bornes de la bobine B2, et les drains des transistors T3 et T4 sont reliés, ensemble, aux deuxièmes bornes des bobines B1 et B2.

Le sens de l'enroulement du fil qui constitue ces bobines est tel que le sens du courant désigné par I1, respectivement I2, à la fig. 5 correspond au sens du courant défini comme sens positif dans la description des fig. 1 et 3.

Les grilles G1 à G6 des transistors T1 à T6 sont reliées à un circuit logique formé de portes ET 81 à 88, de portes OU 89 à 94 et d'inverseurs 95 à 99, qui sont branchés les uns aux autres de la manière représentée.

Ces grilles G1 à G6 reçoivent de ce circuit logique des signaux qui ont l'état logique «0» ou l'état logique «1». Ces états logiques sont respectivement représentés par le potentiel de la borne négative et par le potentiel de la borne positive de la source d'alimentation. Un signal «0» appliqué sur une des grilles G2, G4 et G6, ou un signal «1» appliqué sur une des grilles G1, G3 et G5, provoque donc le blocage du transistor correspondant. Par contre, un signal «1» appliqué sur une des grilles G2, G4 et G6, ou un signal «0» appliqué sur une des grilles G1, G3 et G5, rend le transistor correspondant conducteur.

Un circuit de commande 100, qui ne sera pas décrit en détail, regroupe tous les autres circuits électroniques du dispositif auquel est associé le moteur. Si ce dispositif est une pièce d'horlogerie électronique, le circuit 100 comprend une base de temps formée en général d'un oscillateur à quartz et d'un diviseur de fréquence, un circuit de mise à l'heure associé à une tige de commande et/ou à un ou plusieurs boutons poussoirs, ainsi que, le cas échéant, des circuits auxiliaires tels qu'un circuit de chronographe, de réveil, ou autre.

Le circuit 100 comporte dans le présent exemple une sortie 100a qui délivre une impulsion, c'est-à-dire qui prend temporairement l'état logique «1», chaque fois que l'un des aimants du moteur doit faire un pas. Dans l'exemple décrit, cet aimant est l'aimant 19 du moteur de la fig. 1 ou l'aimant 70 du moteur de la fig. 3.

Le sens de rotation de cet aimant est déterminé, toujours par exemple, par un signal que le circuit 100 délivre sur une sortie 100b. Ce signal est à l'état logique «0» lorsque l'aimant doit tourner dans son sens positif, et à l'état logique «1» lorsque cet aimant doit tourner dans son sens négatif.

De même, le circuit 100 délivre sur une sortie 100c une impulsion qui prend l'état logique «1» chaque fois que le deuxième aimant du moteur doit faire un pas. Dans l'exemple décrit, cet aimant est l'aimant 20 du moteur de la fig. 1 ou l'aimant 71 du moteur de la fig. 3. Le sens de rotation de ce deuxième aimant est déterminé par un signal délivré par une sortie 100d du circuit 100. A nouveau, ce signal est à l'état logique «0» si ce deuxième aimant doit tourner dans son sens positif, et à l'état logique «1» si ce deuxième aimant doit tourner dans son sens négatif.

Le circuit 100 délivre en outre sur une sortie 100e un signal périodique ayant une fréquence de, par exemple, 128 Hz avec lequel les signaux fournis par les sorties 100a et 100c sont synchronisés, de manière qu'ils passent à l'état logique «1» à un instant où le signal fourni par la sortie 100e passe à l'état logique «0».

Enfin, le circuit 100 est agencé de manière que les sorties 100a et 100c ne délivrent jamais simultanément leur signal.

L'entrée d'horloge C1 d'un flip-flop 101, de type D, est reliée à la sortie 100a du circuit 100. La sortie $\overline{Q}$ de ce flip-flop 101 est reliée à son entrée D, et son entrée R de remise à zéro est reliée à la sortie 100e du circuit 100.

Un deuxième flip-flop, également de type D, désigné par la référence 102, a son entrée d'horloge C1 reliée à la sortie $\overline{Q}$ du flip-flop 101, sa sortie $\overline{Q}$ reliée à son entrée D, et son entrée R de remise à zéro reliée à la sortie 100e du circuit 100 par l'intermédiaire d'un inverseur 103.

Un troisième flip-flop du type D, désigné par la référence 104, a son entrée d'horloge C1 reliée à la sortie 100c du circuit 100, sa sortie $\overline{Q}$ reliée à son entrée D, et son entrée R de remise à zéro reliée à la sortie 100e du circuit 100.

Enfin, un quatrième flip-flop de type D, désigné par la référence 105, a son entrée d'horloge C1 reliée à la sortie $\overline{Q}$ du flip-flop 104, sa sortie $\overline{Q}$ reliée à son entrée D, et son entrée R de remise à zéro reliée à la sortie de l'inverseur 103.

Il est facile de voir que lorsque les sorties Q des flip-flops 101, 102, 104 et 105 sont à l'état logique «0», les grilles G1, G3 et G5 sont à l'état logique «1», et les grilles G2, G4 et G6 sont à l'état logique «0». Tous les transistors T1 à T6 sont donc bloqués, et aucun courant ne circule dans les bobines B1 et B2.

Chaque fois que la sortie 100a du circuit 100 délivre une impulsion, la sortie Q du flip-flop 101 passe à l'état logique «1». Cette sortie Q du flip-flop 101 repasse à l'état «0» lorsque le signal fourni par la sortie 100e du circuit 100 passe à l'état «1». Cette sortie Q du flip-flop 101 fournit donc une impulsion qui est à l'état «1» pendant une demi-période du signal fourni par la sortie 100e du circuit 100, c'est-à-dire pendant 3,9 millisecondes environ.

A la fin de chaque impulsion fournie par la sortie Q du flip-flop 101, la sortie Q du flip-flop 102 passe également à l'état «1», et repasse à l'état «0» lorsque la sortie 100e du circuit 100 passe à l'état «0».

Les sorties Q des flip-flops 101 et 102 délivrent donc deux impulsions consécutives d'une durée de 3,9 millisecondes environ chacune chaque fois que le premier aimant du moteur doit tourner d'un tour.

Lorsque la sortie 100b du circuit 100 est à l'état «0», la première de ces deux impulsions passe par les portes 81 et 89 et atteint la grille G1 du transistor T1 à travers l'inverseur 97, et la grille G4 du transistor T4 à travers la porte 93. Ces deux transistors T1 et T4 deviennent donc conducteurs pendant la durée de cette impulsion, et un courant passe dans la bobine B1 dans le sens positif.

La deuxième de ces impulsions, qui est fournie par la sortie Q du flip-flop 102, passe par les portes 83 et 90 et atteint la grille G4 du transistor T4 à travers la porte 93 et la grille G5 du transistor T5 à travers l'inverseur 98. Le transistor T1 se bloque donc à nouveau, le transistor T4 reste conducteur, et le transistor T5 devient conducteur pendant la durée de cette deuxième impulsion. Le courant dans la bobine B1 est donc interrompu et un courant passe dans la bobine B2 dans le sens positif.

Les bobines B1 et B2 sont donc parcourues successivement et dans cet ordre par des impulsions de courant positives en réponse au signal fourni par la sortie 100a du circuit 100. Ce cas, qui est illustré par les diagrammes de la fig. 6a, correspond au cas des lignes B, C et D des tableaux des fig. 2 et 4. Le premier aimant du moteur, et donc le rotor dont il fait partie, fait un pas, c'est-à-dire un tour complet, dans le sens positif, en réponse à chaque impulsion fournie par la sortie 100a du circuit 100 lorsque la sortie 100b de ce circuit 100 est à l'état «0».

Lorsque cette sortie 100b du circuit 100 est à l'état «1», l'impulsion fournie par la sortie Q du flip-flop 101 passe par les portes 84 et 90 et atteint la grille G4 du transistor T4 à travers la porte 93 et la grille G5 du transistor T5 à travers l'inverseur 98. Ces deux transistors T4 et T5 deviennent donc conducteurs, et un courant passe dans la bobine B2 dans le sens positif pendant la durée de cette impulsion.

L'impulsion fournie ensuite par la sortie Q du flip-flop 102 passe par les portes 82 et 89 et atteint la grille G1 du transistor T1 à travers l'inverseur 97, et la grille G4 du transistor T4 à travers la porte 93. Le transistor T4 reste donc conducteur, et le transistor T1 devient conducteur. Un courant également positif passe donc dans la bobine B1 pendant la durée de cette impulsion.

Cette fois, les bobines B2 et B1 sont donc parcourues successivement et dans cet ordre par des impulsions de courant positives en réponse au signal fourni par la sortie 100a du circuit 100. Ce cas, illustré par la fig. 6b, correspond au cas des lignes E, F et G des tableaux des fig. 2 et 4. Le premier aimant du moteur fait donc un pas dans le sens négatif en réponse à chaque impulsion fournie par la sortie 100a du circuit 100 lorsque la sortie 100b de ce circuit 100 est à l'état «1».

Il est facile de voir, par analogie avec la description du fonctionnement des flip-flops 101 et 102, que les sorties Q des flip-flops 104 et 105 délivrent deux impulsions consécutives chaque fois que la sortie 100c du circuit délivre une impulsion.

Lorsque la sortie 100d du circuit 100 est à l'état «0», l'impulsion fournie par la sortie Q du flip-flop 104 atteint la grille G2 du transistor T2 par l'intermédiaire des portes 85 et 91 et, en outre, la grille G3 du transistor T3 par l'intermédiaire de la porte 94 et de l'inverseur 99. Les transistors T2 et T3 deviennent donc conducteurs, et un courant négatif circule dans la bobine B1 pendant la durée de cette impulsion.

L'impulsion fournie par la sortie Q du flip-flop 105 atteint la grille G6 du transistor T6 par l'intermédiaire des portes 87 et 92 et, en outre, la grille G3 du transistor T3 par l'intermédiaire de la porte 94 et de l'inverseur 99. Le transistor T3 reste donc conducteur, et le transistor T6 devient conducteur pendant la durée de cette impulsion, et un courant négatif circule dans la bobine B2. Ce cas, qui est illustré par la fig. 7a, correspond au cas des lignes H, I et J des tableaux des fig. 2 et 4.

Le deuxième aimant du moteur fait donc un pas en sens positif en réponse à chaque impulsion fournie par la sortie 100c du circuit 100 lorsque la sortie 100d de ce circuit 100 est à l'état «0».

Lorsque cette sortie 100d du circuit 100 est à l'état «1», l'impulsion fournie par la sortie Q du flip-flop 104 atteint la grille G6 du transistor T6 par l'intermédiaire des portes 88 et 92 et, en outre, la grille G3 du transistor T3 par l'intermédiaire de la porte 94 et de l'inverseur 99. Ces deux transistors T3 et T6 deviennent donc conducteurs, et un courant négatif circule dans la bobine B2 pendant cette impulsion.

L'impulsion fournie ensuite par la sortie Q du flip-flop 105 atteint la grille G2 du transistor T2 par l'intermédiaire des portes 86 et 91 et, en outre, la grille G3 du transistor T3 par l'intermédiaire de la porte 94 et de l'inverseur 99. Le transistor T3 reste donc conducteur et le transistor T2 devient conducteur pendant cette impulsion, et un courant négatif circule dans la bobine B1.

Ce cas, qui est illustré par la fig. 7b, correspond au cas des lignes K, L et M des tableaux des fig. 2 et 4. Le deuxième aimant du moteur fait donc un pas en sens négatif en réponse à chaque impulsion fournie par la sortie 100c du circuit 100, lorsque la sortie 100d de ce circuit 100 est à l'état «1».

Le circuit de commande qui vient d'être décrit délivre des paires d'impulsions de courant ayant des durées égales. En outre, le début de la deuxième impulsion de chaque paire coïncide avec la fin de la première impulsion. Enfin, tous les transistors T1 à T6 sont bloqués entre les paires d'impulsions de courant. Il est évident qu'il est possible de modifier ce circuit de commande pour qu'il délivre, si nécessaire, des impulsions de durées différentes, et/ou pour que la deuxième impulsion de chaque paire soit enclenchée avant ou après la fin de la première impulsion. Il est également possible de le modifier pour que les trois transistors T1, T3 et T5, ou les trois transistors T2, T4 et T6, soient conducteurs entre les impulsions de courant, afin de court-circuiter les bobines et d'accélérer l'amortissement des oscillations que les aimants exécutent autour de leur position de repos à la fin de leur pas. Ces modifications sont à la portée de l'homme du métier et ne seront pas décrites ici.

Le circuit de commande du moteur peut également être combiné avec un circuit d'asservissement de la durée des impulsions de courant à la grandeur de la charge mécanique réellement entraînée par le moteur. Dans les cas où les deux bobines ne sont jamais enclenchées simultanément, il est possible de brancher ce circuit d'asservissement à la bobine qui n'est pas parcourue par un courant à l'aide d'un circuit commutateur commandé par les signaux fournis par le circuit logique. Le circuit d'asservissement peut alors simplement utiliser la tension induite dans la bobine à laquelle il est relié pour commander l'interruption du courant dans l'autre bobine à un instant dépendant de la grandeur de la charge mécanique entraînée. Il estiste de nombreux types de ces circuits d'asservissement qui sont bien connus et qui ne seront pas décrits ici.

**Revendications**

1. Organe moteur comprenant un stator (1; 51) et deux rotors ayant un premier (19c; 70c) et, respectivement, un deuxième axe de rotation (20c; 71c), caractérisé par le fait que:

– le premier rotor comporte un premier aimant permanent (19; 70) ayant un premier axe d'aimantation (19a; 70a) sensiblement perpendiculaire au premier axe de rotation (19c; 70c);

– le deuxième rotor comporte un deuxième aimant permanent (20; 71) ayant un deuxième axe d'aimantation (20a; 71a) sensiblement perpendiculaire au deuxième axe de rotation (20c; 71c); et

– le stator (1; 51) comporte:

– des moyens (21, 22; 72, 73; 80) pour orienter le premier (19a; 70a) et le deuxième axe d'aimantation (20a; 71a) selon un premier (19b; 70b) respectivement un deuxième axe de repos (20b; 71b) en l'absence de toute autre influence; et

– des moyens (16, 18; 67, 68) pour appliquer au premier (19; 70) et au deuxième aimant (20, 71) un premier champ magnétique en réponse à un premier courant et un deuxième champ magnétique en réponse à un deuxième courant, le premier et le deuxième champ magnétique étant sensiblement perpendiculaires au premier (19c; 70c) et au deuxième axe de rotation (20c; 71c), et formant en outre deux angles obtus sensiblement symétriques avec l'un des axes de repos (19b; 70b) et deux angles aigus sensiblement symétriques avec l'autre axe de repos (20b; 71b).

2. Organe moteur selon la revendication 1, caractérisé par le fait que les moyens pour appliquer un premier et un deuxième champ magnétique comportent:

– une première pièce polaire (2) comprenant un premier épanouissement polaire (2a) sensiblement symétrique par rapport au premier axe de repos (19b) et un deuxième épanouissement polaire (2b) sensiblement symétrique par rapport au deuxième axe de repos (20b);

– une deuxième (3) et une troisième pièce polaire (4) comprenant un troisième (3a), respectivement un quatrième épanouissement polaire (4a) sensiblement symétriques l'un de l'autre par rapport au premier axe de repos (19b) et délimitant avec le premier épanouissement polaire (2a) un premier espace sensiblement cylindrique (5) ayant un axe sensiblement confondu avec le premier axe de rotation (19c);

– une quatrième (9) et une cinquième pièce polaire (10) comprenant un cinquième (9a), respectivement un sixième épanouissement polaire (10a) sensiblement symétriques l'un de l'autre par rapport au deuxième axe de repos (20b) et délimitant avec le deuxième épanouissement polaire (2b) un deuxième espace sensiblement cylindrique (11) ayant un axe sensiblement confondu avec le deuxième axe de rotation (20c);

– une première bobine (16) comportant un noyau (15) ayant une première et une deuxième extrémité respectivement reliées à la deuxième (3) et à la quatrième pièce polaire (9); et

– une deuxième bobine (18) comportant un noyau (17) ayant une première et une deuxième extrémité respectivement reliées à la troisième (4) et à la cinquième pièce polaire (10);

et par le fait que le premier (19a) et le deuxième axe d'aimantation (20a) sont tous deux orientés dans un sens allant du milieu du premier (2a), respectivement du deuxième épanouissement polaire (2b) vers le premier (19c), respectivement le deuxième axe de rotation (20c), ou dans le sens inverse.

3. Organe moteur selon la revendication 2, caractérisé par le fait que les moyens pour orienter le premier (19a) et le deuxième axe d'aimantation (20a) comportent un troisième aimant permanent (21) couplé au premier aimant permanent (19) et ayant un troisième axe d'aimantation (21a) situé sensiblement dans un plan contenant le premier axe de rotation (19c) et passant par le milieu du premier épanouissement polaire (2a), et un quatrième aimant permanent (22) couplé au deuxième aimant permanent (20) et ayant un quatrième axe d'aimantation (22a) situé sensiblement dans un plan contenant le deuxième axe de rotation (20c) et passant par le milieu du deuxième épanouissement polaire (2b).

4. Organe moteur selon la revendication 3, caractérisé par le fait que les moyens pour orienter le premier (19a) et le deuxième axe d'aimantation (20a) comportent en outre un cinquième aimant permanent (21′) ayant un cinquième axe d'aimantation (21′a) sensiblement symétrique du troisième axe d'aimantation (21a) par rapport à une droite (31) perpendiculaire au premier axe de rotation (19c) et passant par le milieu du premier épanouissement polaire (2a) et un sixième aimant permanent (22′) ayant un sixième axe d'aimantation (22′a) sensiblement symétrique du quatrième axe d'aimantation (22a) par rapport à une droite (32) perpendiculaire au deuxième axe de rotation (20c) et passant par le milieu du deuxième épanouissement polaire (2b).

5. Organe moteur selon la revendication 1, caractérisé par le fait que les moyens pour appliquer un premier et un deuxième champ magnétique comportent:

– une première pièce polaire (52) comprenant un premier épanouissement polaire (52a) sensiblement symétrique par rapport au premier axe de repos (70b) et un deuxième épanouissement polaire (52b) sensiblement symétrique par rapport au deuxième axe de repos (71b);

– une deuxième (53) et une troisième pièce polaire (54) comprenant un troisième (53a), respectivement un quatrième épanouissement polaire (54a) sensiblement symétriques l'un de l'autre par rapport au premier axe de repos (70b) et délimitant avec le premier épanouissement polaire (52a) un premier espace sensiblement cylindrique (55) ayant un axe sensiblement confondu avec le premier axe de rotation (70c);

– une quatrième (59) et une cinquième pièce polaire (60) comprenant un cinquième (59a), respectivement un sixième épanouissement polaire (60a) sensiblement symétriques l'un de l'autre par rapport au deuxième axe de repos (71b) et délimitant avec le deuxième épanouissement polaire (52b) un deuxième espace sensiblement cylindrique (61) ayant un axe sensiblement confondu avec le deuxième axe de rotation (71c);

– une première armature (65) reliée à la deuxième (53) et à la quatrième pièce polaire (59) et une deuxième armature (66) reliée à la troisième (54) et à la cinquième pièce polaire (60);

– une première (67) et une deuxième bobine (68); et

– des moyens pour relier magnétiquement la première (67) et la deuxième bobine (68) à la première pièce polaire (52) et, respectivement, à la première (65) et à la deuxième armature (66).

6. Organe moteur selon la revendication 5, caractérisé par le fait que les moyens pour relier magnétiquement la première (67) et la deuxième bobine (68) à la première pièce polaire (52) et, respectivement, à la première (65) et à la deuxième armature (66) comportent un noyau (69) couplé magnétiquement aux deux bobines (67, 68) et ayant une partie centrale située entre les deux bobines (67, 68) et reliée à la première pièce polaire (52), et deux extrémités respectivement reliées à la première (65) et à la deuxième armature (66).

7. Organe moteur selon la revendication 5, caractérisé par le fait que les moyens pour relier magnétiquement la première (67) et la deuxième bobine (68) à la première pièce polaire (52) et, respectivement, à la première (65) et la deuxième armature (66) comportent un premier (69a) et un deuxième noyau (69b) respectivement couplés magnétiquement à la première (67) et à la deuxième bobine (68) et ayant chacun une première extrémité reliée à la première pièce polaire (52) et une deuxième extrémité reliée à la première (65), respectivement à la deuxième armature (66).

8. Organe moteur selon la revendication 5, caractérisé par le fait que les moyens pour orienter le premier (70a) et le deuxième axe d'aimantation (71a) comportent un troisième aimant permanent (80) couplé au premier (70) et au deuxième aimant permanent (71) de manière à orienter le premier axe d'aimantation (70a) dans une direction allant sensiblement du milieu du premier épanouissement polaire (52a) vers le premier axe de rotation (70c) et le deuxième axe d'aimantation (71a) dans une direction allant sensiblement du deuxième axe de rotation (71c) vers le milieu du deuxième épanouissement polaire (52b).

9. Organe moteur selon la revendication 8, caractérisé par le fait que les moyens pour orienter le premier (70a) et le deuxième axe d'aimantation (71a) comportent un quatrième aimant permanent (80') sensiblement symétrique du troisième aimant permanent (80) par rapport à la première pièce polaire (52).

10. Organe moteur selon la revendication 5, caractérisé par le fait que les moyens pour orienter le premier (70a) et le deuxième axe d'aimantation (71a) comportent un troisième aimant permanent (72) couplé au premier aimant permanent (70) de manière à orienter le premier axe d'aimantation (70a) dans une direction allant sensiblement du milieu du premier épanouissement polaire (52a) vers le premier axe de rotation (70c) et un quatrième aimant permanent (73) couplé au deuxième aimant permanent (71) de manière à orienter le deuxième axe d'aimantation (71a) dans une direction allant sensiblement du deuxième axe de rotation (71c) vers le milieu du deuxième épanouissement polaire (52b).

11. Organe moteur selon la revendication 10, caractérisé par le fait que les moyens pour orienter le premier (70a) et le deuxième axe d'aimantation (71a) comportent un cinquième (72') et un sixième aimant permanent (73') sensiblement symétriques du troisième (72), respectivement du quatrième aimant permanent (73) par rapport à la première pièce polaire (52).

12. Organe moteur selon l'une des revendications 1 à 11, caractérisé par le fait que la valeur des angles obtus est comprise entre 100° environ et 160° environ et la valeur des angles aigus est comprise entre 20° environ et 80° environ.

13. Organe moteur selon la revendication 12, caractérisé par le fait que la valeur des angles obtus est égale à 120° environ et la valeur des angles aigus est égale à 60° environ.

14. Procédé de commande de l'organe moteur selon la revendication 2 ou 5, caractérisé par le fait qu'il consiste à produire une première paire d'impulsions de courant consécutives ayant un premier sens, à appliquer la première impulsion de la première paire à la première bobine (16; 67) et la deuxième impulsion de la première paire à la deuxième bobine (18; 68) pour faire tourner le premier aimant (19; 70) dans un premier sens, à appliquer la première impulsion de la première paire à la deuxième bobine (18; 68) et la deuxième impulsion de la première paire à la première bobine (16; 67) pour faire tourner le premier aimant (19; 70) dans le deuxième sens, à produire une deuxième paire d'impulsions de courant consécutives ayant le deuxième sens, à appliquer la première impulsion de la deuxième paire à la première bobine (16; 67) et la deuxième impulsion de la deuxième paire à la deuxième bobine (18; 68) pour faire tourner le deuxième aimant (20; 71) dans un premier sens, et à appliquer la première impulsion de la deuxième paire à la deuxième bobine (18; 68) et la deuxième impulsion de la deuxième paire à la première bobine (16; 67) pour faire tourner le deuxième aimant (20; 71) dans le deuxième sens.

**Claims**

1. A motor unit comprising a stator (1; 51) and a pair of rotors having first (19c; 70c) and second (20c; 71c) axes of rotation respectively, characterised in that:

– the first rotor includes a first permanant magnet (19; 70) having a first axis of magnetisation (19a; 70a) substantially perpendicular to the first axis of rotation (19c; 70c);

– the second rotor includes a second permanent magnet (20; 71) having a second axis of magnetisation (20a; 71a) substantially perpendicular to the second axis of rotation (20c; 71c); and

– the stator (1; 51) includes:

– means (21, 22; 72, 73; 80) for orienting said first (19a; 70a) and second (20a; 71a) axes of magnetisation respectively with first (19b; 70b) and second (20b; 71b) axes of rest in the absence of any other influence; and

– means (16, 18; 67, 68) for applying to said first (19; 70) and second (20; 71) magnets a first magnetic field in response to a first current and a second magnetic field in response to a second current, said first and second magnetic fields being substantially perpendicular to said first (19c; 70c) and second (20c; 71c) axes of rotation, and further forming a pair of obtuse substantially symmetrical angles with one of the axes of rest (19b; 70b) and a pair of acute substantially symmetrical angles with the other axis of rest (20b; 71b).

2. A motor unit as in claim 1, characterised in that the means for applying said first and second magnetic fields include:

– a first pole piece (2) comprising a first pole face (2a) that is substantially symmetrical with respect to the first axis of rest (19b) and a second pole face (2b) that is substantially symmetrical with respect to the second axis of rest (20b);

– second (3) and third (4) pole pieces comprising respectively third (3a) and fourth (4a) pole faces that are substantially symmetrical to each other with respect to the first axis of rest (19b) and defining together with the first pole face (2a) a first substantially cylindrical space (5) having an axis substantially coextensive with the first axis of rotation (19c);

– fourth (9) and fifth (10) pole pieces comprising respectively fifth (9a) and sixth (10a) pole faces that are substantially symmetrical to each other with respect to the second axis of rest (20b) and defining together with the second pole face (2b) a second substantially cylindrical space (11) having an axis substantially coextensive with the second axis of rotation (20c);

– a first coil (16) comprising a core (15) having first and second ends respectively connected to the second (3) and fourth (9) pole pieces; and

– a second coul (18) comprising a core (17) having first and second ends respectively connected to the third (4) and fifth (10) pole pieces;

and in that the first (19a) and second (20a) axes of magnetisation are both oriented in directions extending from respectively the middle of the first (2a) and second (2b) pole faces towards respectively the first (19c) and second (20c) axes of rotation, or in the reverse directions.

3. A motor unit as in claim 2, characterised in that the means for orienting said first (19a) and second (20a) axes of magnetisation include a third permanent magnet (21) coupled with the first permanent magnet (19) and having a third axis of magnetisation (21a) located substantially in a plane containing the first axis of rotation (19c) and passing through the middle of the first pole face (2a), and a fourth permanent magnet (22) coupled with the second permanent magnet (20) and having a fourth axis of magnetisation (22a) located substantially in a plane containing the second axis of rotation (20c) and passing through the middle of the second pole face (2b).

4. A motor unit as in claim 3, characterised in that the means for orienting said first (19a) and second (20a) axes of magnetisation further include a fifth permanent magnet (21') having a fifth axis of magnetisation (21a') that is substantially symmetrical to the third axis of magnetisation (21a) with respect to a straight line (31) perpendicular to the first axis of rotation (19c) and passing through the middle of the first pole face (2a), and a sixth permanent magnet (22') having a sixth axis of magnetisation (22a') that is substantially symmetrical to the fourth axis of magnetisation (22a) with respect to a straight line (32) perpendicular to the second axis of rotation (20c) and passing through the middle of the second pole face (2b).

5. A motor unit as in claim 1, characterised in that the means for applying said first and second magnetic fields include:

– a first pole piece (52) comprising a first pole face (52a) that is substantially symmetrical with respect to the first axis of rest (70b) and a second pole face (52b) that is substantially symmetrical with respect to the second axis of rest (71b);

– second (53) and third (54) pole pieces comprising respectively third (53a) and fourth (54a) pole faces that are substantially symmetrical to each other with respect to the first axis of rest (70b) and defining together with the first pole face (52a) a first substantially cylindrical space (55) having an axis coextensive with the first axis of rotation (70c);

– fourth (59) and fifth (60) pole pieces comprising respectively fifth (59a) and sixth (60a) pole faces that are substantially symmetrical to each other with respect to the second axis of rest (71b) and defining together with the second pole face (52b) a second substantially cylindrical space (61) having an axis substantially coextensive with the second axis of rotation (71c);

– a first armature (65) connected to said second (53) and fourth (59) pole pieces and a second armature (66) connected to said third (54) and fifth (60) pole pieces;

– first (67) and second (68) coils; and

– means for magnetically connecting said first (67) and second (68) coils to the first pole piece (52) and, respectively, to said first (65) and second (66) armatures.

6. A motor unit as in claim 5, characterised in that the means for magnetically connecting said first (67) and second (68) coils to the first pole piece (52) and, respectively, to said first (65) and second (66) armatures include a core (69) which is magnetically coupled with said two coils (67, 68) and which has a central portion located between said two coils (67, 68) and connected to the first pole piece (52), and two ends respectively connected to said first (65) and second (66) armatures.

7. A motor unit as in claim 5, characterised in that the means for magnetically connecting said first (67) and second (68) coils to the first pole piece (52) and, respectively, to said first (65) and second (66) armatures include first (69a) and second (69b) cores that are respectively magnetically coupled with said first (67) and second (68) coils and which each have a first end connected to the first pole piece (52) and a second end respectively connected to the first (65) and second (66) armatures.

14

8. A motor unit as in claim 5, characterised in that the means for orienting said first (70a) and second (71a) axes of magnetisation include a third permanent magnet (80) coupled with said first (70) and second (71) permanent magnets such as to orient the first axis of magnetisation (70a) in a direction extending substantially from the middle of the first pole face (52a) towards the first axis of rotation (70c) and the second axis of magnetisation (71a) in a direction extending substantially from the second axis of rotation (71c) towards the middle of the second pole face (52b).

9. A motor unit as in claim 8, characterised in that the means for orienting said first (70a) and second (71a) axes of magnetisation include a fourth permanent magnet (80') that is substantially symmetrical to the third permanent magnet (80) with respect to the first pole piece (52).

10. A motor unit as in claim 5, characterised in that the means for orienting said first (70a) and second (71a) axes of magnetisation include a third permanent magnet (72) coupled with the first permanent magnet (70) such as to orient the first axis of magnetisation (70a) in a direction extending substantially from the middle of the first pole face (52a) towards the first axis of rotation (70c) and a fourth permanent magnet (73) coupled with the second permanent magnet (71) such as to orient the second axis of magnetisation (71a) in a direction extending substantially from the second axis of rotation (71c) towards the middle of the second pole face (52b).

11. A motor unit as in claim 10, characterised in that the means for orienting said first (70a) and second (71a) axes of magnetisation include fifth (72') and sixth (73') permanent magnets that are substantially symmetrical to said third (72) and fourth (73) permanent magnets respectively, with respect to the first pole piece (52).

12. A motor unit as in any one of claims 1 to 11, characterised in that the value of the obtuse angles lies between about 100° and 160° and the value of the acute angles lies between about 20° and 80°.

13. A motor unit as in claim 12, characterised in that the value of the obtuse angles is equal to about 120° and the value of the acute angles is equal to about 60°.

14. A method of controlling the motor unit as claimed in claim 2 or 5, characterised in that it comprises producing a first pair of consecutive current pulses having a first direction, applying the first pulse of said first pair to the first coil (16; 67) and the second pulse of said first pair to the second coil (18; 68) to rotate the first magnet (19; 70) in one direction, applying the first pulse of said first pair to the second coil (18; 68) and the second pulse of said first pair to the first coil (16; 67) to rotate the first magnet (19; 70) in the opposite direction, producing a second pair of consecutive current pulses having a second direction, applying the first pulse of said second pair to the first coil (16; 67) and the second pulse of said second pair to the second coil (18; 68) to rotate the second magnet (20; 71) in one direction, and applying the first pulse of said second pair to the second coil (18; 68) and the second pulse of said second pair to the first coil (16; 67) to rotate the second magnet (20; 71) in the opposite direction.

**Patentansprüche**

1. Motor, der einen Stator (1; 51) aufweist sowie zwei Rotoren mit einer ersten (19c; 70c) bzw. einer zweiten (20c; 71c) Rotationsachse, dadurch gekennzeichnet, dass
— der erste Rotor einen ersten Permanentmagneten (19; 70) aufweist mit einer ersten Magnetisierungsachse (19a; 70a), die im wesentlichen senkrecht zur ersten Rotationsachse (19c; 70c) ist;
— der zweite Rotor einen zweiten Permanentmagneten (20; 71) aufweist, mit einer zweiten Magnetisierungsachse (20a; 71a), die im wesentlichen senkrecht zur zweiten Rotationsachse (20c; 71c) ist und dass
— der Stator (1; 51) aufweist:
— eine Anordnung (21, 22; 72, 73; 80) zum Ausrichten der ersten (19a; 70a) und der zweiten (20a; 71a) Magnetisierungsachse entlang einer ersten (19b; 70b) bzw. einer zweiten (20b; 71b) Ruheachse bei Abwesenheit eines jeglichen anderen Einflusses; und
— eine Anordnung (16, 18; 67, 68), um an dem ersten (19; 70) und an dem zweiten (20; 71) Magneten ein erstes Magnetfeld anzulegen infolge eines ersten Stroms und ein zweites Magnetfeld infolge eines zweiten Stromes, wobei das erste und das zweite Magnetfeld im wesentlichen senkrecht zur ersten (19c; 70c) und zur zweiten (20c; 71c) Rotationsachse sind und im übrigen zwei stumpfe Winkel bilden, die im wesentlichen symmetrisch zu einer der Ruheachsen (19b; 70b) sind sowie zwei spitze Winkel, die im wesentlichen symmetrisch zu der anderen Ruheachse (20b; 71b) sind.

2. Motor nach Anspruch 1, dadurch gekennzeichnet, dass die Anordnung zum Anlegen eines ersten und eines zweiten Magnetfeldes aufweist:
— ein erstes Polstück (2) mit einem ersten Polschuh (2a), der im wesentlichen symmetrisch bezüglich der ersten Ruheachse (19b) ist und einen zweiten Polschuh (2b), der im wesentlichen symmetrisch bezüglich der zweiten Ruheachse (20b) ist;
— ein zweites (3) und ein drittes Polstück (4) mit einem dritten (3a) bzw. einem vierten Polschuh (4a), die gegeneinander im wesentlichen symmetrisch zur ersten Ruheachse (19b) sind und mit dem ersten Polschuh (2a) einen ersten im wesentlichen zylindrischen Raum (5) begrenzen, dessen Achse im wesentlichen mit der ersten Rotationsachse (19c) zusammenfällt;
— ein viertes (9) und ein fünftes Polstück (10) mit einem fünften (9a) bzw. einem sechsten Polschuh (10a), die gegeneinander im wesentlichen symmetrisch bezüglich der zweiten Ruheachse (20b) sind und mit dem zweiten Polschuh (2b) einen zweiten im wesentlichen zylindrischen Raum (11) begrenzen, dessen Achse im wesentlichen mit der zweiten Rotationsachse (20c) zusammenfällt;
— eine erste Spule (16) mit einem Kern (15), der ein erstes und ein zweites Ende aufweist, die mit dem zweiten (3) bzw. dem vierten Polstück (9) verbunden sind; und

– eine zweite Spule (18) mit einem Kern (17), dessen erstes und zweites Ende mit dem dritten (4) bzw. dem fünften Polstück (10) verbunden ist;

und dass die erste (19a) und die zweite Magnetisierungsachse (20a) beide in einer Richtung ausgerichtet sind, die sich von der Mitte des ersten (2a) bzw. des zweiten Polschuhs (2b) zur ersten (19c) bzw. zur zweiten Rotationsachse (20c) erstrecken oder in entgegengesetzter Richtung.

3. Motor nach Anspruch 2, dadurch gekennzeichnet, dass die Anordnung zum Ausrichten der ersten (19a) und der zweiten Magnetisierungsachse (20a) einen dritten Permanentmagneten (21) aufweist, der mit dem ersten Permanentmagneten (19) gekoppelt ist und eine dritte Magnetisierungsachse (21a) aufweist, die im wesentlichen in einer Ebene liegt, die die erste Rotationsachse (19c) enthält und durch die Mitte des ersten Polschuhs (2a) verläuft sowie einen vierten Permanentmagneten (22) aufweist, der mit dem zweiten Permanentmagneten (20) gekoppelt ist und der eine vierte Magnetisierungsachse (22a) aufweist, die im wesentlichen in einer Ebene angeordnet ist, die die zweite Rotationsachse (20c) enthält und durch die Mitte des zweiten Polschuhs (2b) verläuft.

4. Motor nach Anspruch 3, dadurch gekennzeichnet, dass die Anordnung zum Ausrichten der ersten (19a) und der zweiten Magnetisierungsachse (20a) ausserdem einen fünften Permanentmagneten (21') aufweist mit einer fünften Magnetisierungsachse (21a'), die im wesentlichen symmetrisch zur dritten Magnetisierungsachse (21a) bezüglich einer Geraden (31) ist, die senkrecht zur ersten Rotationsachse (19c) ist und durch die Mitte des ersten Polschuhs (2a) verläuft sowie einen sechsten Permanentmagneten (22') aufweist mit einer sechsten Magnetisierungsachse (22a'), die im wesentlichen symmetrisch zur vierten Magnetisierungsachse (22a) ist bezüglich einer Geraden (32), die senkrecht zur zweiten Rotationsachse (20c) ist und durch die Mitte des zweiten Polschuhs (2b) verläuft.

5. Motor nach Anspruch 1, dadurch gekennzeichnet, dass die Anordnung zum Anlegen eines ersten und eines zweiten Magnetfeldes aufweist:

– ein erstes Polstück (52) mit einem ersten Polschuh (52a), der im wesentlichen symmetrisch bezüglich der ersten Ruheachse (70b) ist und mit einem zweiten Polschuh (52b), der im wesentlichen symmetrisch bezüglich der zweiten Ruheachse (71b) ist;

– ein zweites (53) und ein drittes Polstück (54) mit einem dritten (53a) bzw. einem vierten Polschuh (54a), die gegeneinander im wesentlichen symmetrisch bezüglich der ersten Ruheachse (70b) sind und mit dem ersten Polschuh (52a) einen ersten im wesentlichen zylindrischen Raum (55) begrenzen, dessen Achse im wesentlichen mit der ersten Rotationsachse (70c) zusammenfällt;

– ein viertes (59) und ein fünftes Polstück (60) mit einem fünften (59a) bzw. einem sechsten Polschuh (60a), die gegeneinander im wesentlichen symmetrisch bezüglich der zweiten Ruheachse (71b) sind und mit dem zweiten Polschuh (52b) einen zweiten im wesentlichen zylindrischen Raum (61) begrenzen, dessen Achse im wesentlichen mit der zweiten Rotationsachse (71c) zusammenfällt;

– einen ersten Anker (65), der mit dem zweiten (53) und dem vierten Polstück (59) verbunden ist und einen zweiten Anker (66), der mit dem dritten (54) und dem fünften Polstück (60) verbunden ist;

– eine erste (67) und eine zweite Spule (68); und

– eine Anordnung um magnetisch die erste (67) und die zweite Spule (68) mit dem ersten Polstück (52) und mit dem ersten (65) bzw. dem zweiten Anker (66) zu verbinden.

6. Motor nach Anspruch 5, dadurch gekennzeichnet, dass die Anordnung zum magnetischen Verbinden der ersten (67) und der zweiten Spule (68) mit dem ersten Polstück (52) und dem ersten (65) bzw. dem zweiten Anker (66) einen Kern (69) aufweist, der magnetisch mit den beiden Spulen (67, 68) gekoppelt ist und der einen zentralen Abschnitt aufweist, der zwischen den beiden Spulen (67, 68) angeordnet ist und mit dem ersten Polstück (52) verbunden ist sowie zwei Enden aufweist, die mit dem ersten (65) bzw. dem zweiten Anker (66) verbunden sind.

7. Motor nach Anspruch 5, dadurch gekennzeichnet, dass die Anordnung zum magnetischen Verbinden der ersten (67) und der zweiten Spule (68) mit dem ersten Polstück (52) und mit dem ersten (65) bzw. dem zweiten Anker (66) einen ersten (69a) und einen zweiten Kern (69b) aufweist, die magnetisch mit der ersten (67) bzw. der zweiten Spule (68) gekoppelt sind und deren jeder ein erstes Ende aufweist, das mit dem ersten Polstück (52) verbunden ist und ein zweites Ende aufweist, das mit dem ersten (65) bzw. mit dem zweiten Anker (66) verbunden ist.

8. Motor nach Anspruch 5, dadurch gekennzeichnet, dass die Anordnung zum Ausrichten der ersten (70a) und der zweiten Magnetisierungsachse (71a) einen dritten Permanentmagneten (80) aufweist, der mit dem ersten (70) und mit dem zweiten Permanentmagneten (71) derart gekoppelt ist, dass die erste Magnetisierungsachse (70a) in einer Richtung ausgerichtet wird, die im wesentlichen von der Mitte des ersten Polschuhs (52a) zur ersten Rotationsachse (70c) weist und die zweite Magnetisierungsachse (71a) in eine Richtung ausrichtet, die im wesentlichen von der zweiten Rotationsachse (71c) zur Mitte des zweiten Polschuhs (52b) weist.

9. Motor nach Anspruch 8, dadurch gekennzeichnet, dass die Anordnung zum Ausrichten der ersten (70a) und der zweiten Magnetisierungsachse (71a) einen vierten Permanentmagneten (80') aufweist, der im wesentlichen symmetrisch zum dritten Permanentmagneten (80) bezüglich des ersten Polstücks (52) ist.

10. Motor nach Anspruch 5, dadurch gekennzeichnet, dass die Anordnung zum Ausrichten der ersten (70a) und der zweiten Magnetisierungsachse (71a) einen dritten Permanentmagneten (72) aufweist, der mit dem ersten Permanentmagneten (70) derart gekoppelt ist, dass er die erste Magnetisierungsachse (70a) in eine Richtung ausrichtet die im wesentlichen von der Mitte des ersten Polschuhs (52a) zur ersten Rotationsachse (70c) weist sowie einen vierten Permanentmagneten (73) aufweist, der mit dem zweiten Permanentmagneten (71) derart gekoppelt ist, dass er die zweite Magnetisierungsachse (71a) in eine Richtung ausrichtet, die im wesentlichen von der zweiten Rotationsachse (71c) zur Mitte des zweiten Polschuhs (52b) weist.

11. Motor nach Anspruch 10, dadurch gekennzeichnet, dass die Anordnung zum Ausrichten der ersten (70a) und der zweiten Magnetisierungsachse (71a) einen fünften (72') und einen sechsten Permanentmagneten (73') aufweist, die im wesentlichen symmetrisch zum dritten (72) bzw. zum vierten Permanentmagneten (73) bezüglich des ersten Polstücks (52) sind.

12. Motor nach einem der Ansprüche 1 bis 11, dadurch gekennzeichnet, dass der Wert der stumpfen Winkel zwischen ungefähr 100° und ungefähr 160° liegt und dass der Wert der spitzen Winkel zwischen ungefähr 20° und ungefähr 80° liegt.

13. Motor nach Anspruch 12, dadurch gekennzeichnet, dass der Wert der stumpfen Winkel gleich ungefähr 120° ist und der Wert der spitzen Winkel gleich ungefähr 60° ist.

14. Verfahren zur Steuerung des Motors nach Ansprüchen 2 oder 5, dadurch gekennzeichnet, dass es darin besteht, ein erstes Paar aufeinanderfolgender Stromimpulse in einer ersten Richtung zu erzeugen, den ersten Impuls des ersten Paares an die erste Spule (16, 67) zu legen und den zweiten Impuls des ersten Paares an die zweite Spule (18, 68) zu legen, um den ersten Magneten (19, 70) in einer ersten Richtung zu verdrehen, den ersten Impuls des ersten Paares an die zweite Spule (18, 68) zu legen und den zweiten Impuls des ersten Paares an die erste Spule (16, 67) zu legen, um den ersten Magneten (19, 70) in die zweite Richtung zu verdrehen, ein zweites Paar aufeinanderfolgender Stromimpulse in der zweiten Richtung zu erzeugen, den ersten Impuls des zweiten Paares an die erste Spule (16, 67) zu legen und den zweiten Impuls des zweiten Paares an die zweite spule (18, 68) zu legen, um den zweiten Magneten (20, 71) in eine erste Richtung zu verdrehen und den ersten Impuls des zweiten Paares an die zweite Spule (18, 68) zu legen und den zweiten Impuls des zweiten Paares an die erste Spule (16, 67) zu legen, um den zweiten Magneten (20, 71) in die zweite Richtung zu verdrehen.

17

**Fig.1**

**Fig.2**

| | I16 | I18 | C5 | C11 | R19 | R20 |
|---|---|---|---|---|---|---|
| A | | | | | ↑ | ↓ |
| B | + | | ↘ | ↘ | ↗↘ | ↙↓ |
| C | | + | ↙ | ↘ | ✕ | ✕ |
| D | | | | | ↑↗ | ↑↓ |
| E | | + | ↙ | ↘ | ↑↗ | ↘↓ |
| F | + | | ↘ | ↙ | ✕ | ✕ |
| G | | | | | ↑↙ | ↑↓ |
| H | − | | ↗ | ↗ | ↑↗ | ↑↓ |
| I | | − | ↗ | ↖ | ✕ | ✕ |
| J | | | | | ↑↖ | ↑↓ |
| K | | − | ↗ | ↗ | ↑↖ | ↗↓ |
| L | − | | ↗ | ↗ | ✕ | ✕ |
| M | | | | | ↑↗ | ↑↓ |

Fig.3

Fig.3a

|   | I67 | I68 | C55 | C61 | R70 | R71 |
|---|-----|-----|-----|-----|-----|-----|
| A |     |     |     |     | ↑ | ↑ |
| B | + |     | ↘ | ↗ | ↗ | ↗ |
| C |   | + | ↗ | ↘ | ✕ | ✕ |
| D |     |     |     |     | ↗ | ↘ |
| E |   | + | ↗ | ↘ | ✕ | ↗ |
| F | + |     | ↘ | ↗ | ✕ | ✕ |
| G |     |     |     |     | ↗ | ↗ |
| H | − |     | ↗ | ↘ | ✕ | ✕ |
| I |   | − | ↗ | ↘ | ✕ | ✕ |
| J |     |     |     |     | ↗ | ↘ |
| K |   | − | ↗ | ↘ | ✕ | ✕ |
| L | − |     | ↗ | ↗ | ✕ | ✕ |
| M |     |     |     |     | ↗ | ↗ |

Fig.4

| | Fig. 6a | Fig. 6b | | Fig. 7a | Fig. 7b |
|---|---|---|---|---|---|
| 100e | ⊓⊔⊓⊔⊓ | ⊓⊔⊓⊔⊓ | 100e | ⊓⊔⊓⊔⊓ | ⊓⊔⊓⊔⊓ |
| 100b | | | 100d | | |
| 100a | ⊓ | ⊓ | 100c | ⊓ | ⊓ |
| Q101 | ⊓ | ⊓ | Q104 | ⊓ | ⊓ |
| Q102 | ⊔ | ⊔ | Q105 | ⊓ | ⊓ |
| G1 | ⊔ | ⊔ | G1 | | |
| G2 | | | G2 | ⊓ | ⊓ |
| G3 | | | G3 | ⊔ | ⊔ |
| G4 | ⊓ | ⊓ | G4 | | |
| G5 | ⊔ | ⊔ | G5 | | |
| G6 | | | G6 | ⊓ | ⊓ |
| I1 | ⊓ | ⊓ | I1 | ⊔ | ⊔ |
| I2 | ⊓ | ⊓ | I2 | ⊔ | ⊔ |

Fig. 6a    Fig.6b        Fig.7a    Fig.7b

Fig.5

0 092 521

Fig. 1a

Fig. 3b

Fig. 3c

27